# EUROPEAN PATENT SPECIFICATION

(11) **EP 3 531 595 B1**
(45) Date of publication and mention of the grant of the patent: **06.11.2024**
(21) Application number: 17887723.9
(22) Date of filing: 08.12.2017
(51) Int. Cl.: H04L 1/18, H04L 1/00

(54) **METHOD AND APPARATUS FOR SENDING CONTROL INFORMATION AND METHOD AND APPARATUS FOR RECEIVING CONTROL INFORMATION**
VERFAHREN UND VORRICHTUNG ZUM SENDEN VON STEUERINFORMATIONEN SOWIE VERFAHREN UND VORRICHTUNG ZUM EMPFANGEN VON STEUERINFORMATIONEN
PROCÉDÉ ET APPAREIL D'ENVOI D'INFORMATIONS DE COMMANDE ET PROCÉDÉ ET APPAREIL POUR RECEVOIR DES INFORMATIONS DE COMMANDE

(30) Priority: 30.12.2016 CN 201611260267
(43) Date of publication of application: 28.08.2019
(73) Proprietor: Huawei Technologies Co., Ltd., Longgang District Shenzhen, Guangdong 518129 (CN)
(72) Inventor: LYU, Yongxia, Shenzhen Guangdong 518129 (CN); MA, Ruixiang, Shenzhen Guangdong 518129 (CN)
(74) Representative: Pfenning, Meinig & Partner mbB
(86) International application number: PCT/CN2017/115252
(87) International publication number: WO 2018/121222

(56) References cited:
- EP-A1- 2 827 522
- EP-A2- 2 178 239
- CN-A- 101 197 644
- CN-A- 101 924 617
- US-A1- 2016 234 820
- NOKIA ET AL: "Punctured Scheduling for Low Latency Transmissions", vol. RAN WG1, no. Gothenburg, Sweden; 20160822 - 20160826, 21 August 2016 (2016-08-21), XP051125827, Retrieved from the Internet <URL:http://www.3gpp.org/ftp/Meetings_3GPP_SYNC/RAN1/Docs/> [retrieved on 20160821]
- "Multiplexing URLLC and eMBB in DL", 3RD GENERATION PARTNERSHIP PROJECT (3GPP), MOBILE COMPETENCE CENTRE 3GPP TSG RAN WG1 MEETING#86, R1-1609059, 14 October 2016 (2016-10-14), XP051149110
- "On multiplexing between eMBB and URLLC", 3RD GENERATION PARTNERSHIP PROJECT (3GPP), MOBILE COMPETENCE CENTRE 3GPP TSG RAN WG1 MEETING #87, R1-1611849, 18 November 2016 (2016-11-18), XP051175817

## Description

This application claims priority to Chinese Patent Application No. 201611260267.X, filed with the Chinese Patent Office on December 30, 2016 and entitled "CONTROL INFORMATION SENDING METHOD AND APPARATUS, AND CONTROL INFORMATION RECEIVING METHOD AND APPARATUS".

### TECHNICAL FIELD

Embodiments of this application relate to a control information sending method, a control information sending apparatus, a control information receiving method, a control information receiving apparatus, a communications apparatus, a computer-readable storage medium and a chip system.

### BACKGROUND

There is an existing feedback mechanism at present. After receiving data (marked as data #α in the following for ease of understanding and differentiation) sent by a sending device, a receiving device needs to send, to the sending device, feedback information that is determined based on a decoding result. In addition, when the receiving device fails in decoding, the sending device needs to retransmit the data #α based on the feedback information. This can improve data transmission reliability.

However, with development of communications technologies, some services, for example, ultra-reliable and low latency communications (Ultra-reliable/low latency communication, URLLC), have relatively high requirements for transmission latencies. To satisfy a requirement of an URLLC service for a transmission latency, a time-frequency resource that has been allocated to another service having a low requirement for a latency (a victim service) can be occupied or multiplexed to transmit the URLLC service. In this way, the sending device can learn that reliability of transmitting the scheduled victim service is reduced due to occupation or multiplexing of the URLLC service. It is assumed that some of the data #α is data about the victim service. Although the sending device can determine that decoding of the data #α quite probably fails, according to the existing feedback mechanism, retransmission of the data #α still needs to depend on transmission of the feedback information. As a result, a transmission latency of the data #α increases and a network throughput is reduced, affecting use experience of a user of the victim service.

US 2016/234820 A1 describes methods, systems, and devices for wireless communication. A transmitting device may send a signal including multiple transport blocks corresponding to multiple simultaneous hybrid automatic repeat request (HARQ) processes. Additional control information may be used to support the multiple simultaneous HARQ processes. For instance, the additional control information may indicate the number of available HARQ processes, an activity state for each HARQ process (e.g., active new data, active retransmission, or inactive), and the redundancy versions of each HARQ process. In some cases, the additional control information may be included in a downlink grant. A receiving device may respond with an acknowledgement or negative acknowledgment (ACK/NACK) for each of the transport blocks. The transmitting device may identify a retransmission status for each HARQ process based on the ACK/NACKs, and transmit new redundancy versions (or new data) to the receiving device.

EP 2 827 522 A1 describes a method for a first network node for transmitting or retransmitting data to a second network node. The method contains receiving at the first network node from the second network node a feedback parameter in response to a first transmission of at least two data segments of a data packet. The feedback parameter is a number of counted data segments of the at least two data segments incorrectly received or lost or correctly received at the second network node by the first transmission. The method further contains determining at the first network node for a second transmission to the second network node the data as a function of the feedback parameter and transmitting or retransmitting the data by the second transmission from the first network node to the second network node.

Document NOKIA ET AL, "Punctured Scheduling for Low Latency Transmissions", vol. RAN WG1, no. Gothenburg, Sweden; 20160822 - 20160826, (20160821), 3GPP DRAFT; R1-167308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, (20160821), XP051125827 discloses a concept for punctured scheduling for low latency transmissions.

Therefore, a technology is required to reduce a data transmission latency.

### SUMMARY

The above problems are solved by the subject-matter according to the independent claims. Embodiments of this application provide a control information sending method and apparatus according to the independent claims, and a control information receiving method and apparatus according to the independent claims, to reduce a data transmission latency.

According to a first aspect, a control information sending method is provided according to appended claim 1.

According to a second aspect, a control information receiving method is provided according to appended claim 2.

According to a third aspect, a control information sending apparatus is provided according to appended claim 3.

According to a fourth aspect, a control information receiving apparatus is provided according to appended claim 4.

According to another aspect, a computer-readable storage medium is provided according to appended claim 10.

According to another aspect, a communication appartus is provided according to appended claim 9.

### BRIEF DESCRIPTION OF DRAWINGS

FIG. 1 is a schematic architectural diagram of a communications system to which a control information sending method and apparatus and a control information receiving method and apparatus according to an embodiment of this application are applicable;
FIG. 2 is a schematic interaction diagram of a process of transmitting control information (including first control information and second control information) according to an embodiment of this application;
FIG. 3 is a schematic diagram of an example of control information according to an embodiment of this application;
FIG. 4 is a schematic diagram of another example of control information according to an embodiment of this application;
FIG. 5 is a schematic diagram of still another example of control information according to an embodiment of this application;
FIG. 6 is a schematic block diagram of an example of a control information sending apparatus according to an embodiment of this application; and
FIG. 7 is a schematic block diagram of another example of a control information sending apparatus according to an embodiment of this application.

### DESCRIPTION OF EMBODIMENTS

The following clearly and completely describes the technical solutions in the embodiments of this application with reference to the accompanying drawings in the embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should be understood that the embodiments of this application may be applied to various communications systems, such as a Global System for Mobile Communications (Global System of Mobile communication, GSM), a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, a Long Term Evolution Advanced (Advanced long term evolution, LTE-A) system, a Universal Mobile Telecommunications System (Universal Mobile Telecommunication System, UMTS), and a next-generation communications system.

Generally, a quantity of connections supported by a conventional communications system is limited and the connections are easy to implement. However, with development of communications technologies, a mobile communications system not only supports conventional communication, but also supports, for example, device-to-device (Device to Device, D2D) communication, machine to machine (Machine to Machine, M2M) communication, machine type communication (Machine Type Communication, MTC), and vehicle-to-vehicle (Vehicle to Vehicle, V2V) communication.

The embodiments of this application describe the embodiments with reference to a terminal device. The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, and a user apparatus. The terminal device may be a station (STATION, ST) in a wireless local area network (Wireless Local Area Networks, WLAN), a cellular phone, a cordless telephone set, a Session Initiation Protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, an in-vehicle device, a wearable device, a terminal device in a next generation communications system such as a fifth generation (fifth-generation, 5G) communications network, a terminal device in a future evolved public land mobile network (Public Land Mobile Network, PLMN), or the like.

As an example rather than a limitation, in the embodiments of this application, the terminal device may be a wearable device. The wearable device may also be referred to as a wearable smart device and is a general name of wearable devices that are developed by applying a wearable technology to perform intelligent design for everyday wearables, such as glasses, gloves, a watch, clothing, and shoes. The wearable device is a portable device that is directly worn on a body or is incorporated into a garment or an ornament of a user. The wearable device is not merely a hardware device, and even implements powerful functions through software support, data exchange, and cloud interaction. The wearable smart device in a broad sense includes a large-size device that includes a full range of functions and that can implement all or some of the functions without relying on a smartphone, for example, a smartwatch or smart glasses; and a device that is specialized in a specific type of application function and that needs to be used cooperatively with another device such as a smartphone, for example, a smart band or a smart jewel that monitors vital signs.

In addition, the embodiments of this application describe the embodiments with reference to a network device. The network device may be a device configured to communicate with a mobile device. The network device may be an access point (ACCESS POINT, AP) in a WLAN, a base transceiver station (Base Transceiver Station, BTS) in GSM or CDMA, a NodeB (NodeB, NB) in WCDMA, an evolved NodeB (Evolutional Node B, eNB or eNodeB), a relay node, or an access point in LTE, an in-vehicle device, a wearable device, a network device in a future 5G network, a network device in a future evolved PLMN network, or the like.

Moreover, in the embodiments of this application, the network device serves a cell. The terminal device communicates with the network device by using a transmission resource (for example, a frequency domain resource or a spectrum resource) used by the cell. The cell may be a cell corresponding to the network device (for example, a base station), and the cell may belong to a macro base station or belong to a base station corresponding to a small cell (small cell). The small cell herein may include a metro cell (Metro cell), a micro cell (Micro cell), a pico cell (Pico cell), a femto cell (Femto cell), and the like. These small cells are characterized by a small coverage area and a low transmit power, and are applicable to providing a high-rate data transmission service.

Furthermore, a plurality of cells may simultaneously work on a same carrier in an LTE system or a 5G system. In some special scenarios, the carrier and the cell may be considered to be the same conceptually. For example, in a carrier aggregation (CA, Carrier Aggregation) scenario, when a secondary component carrier is configured for UE, both a carrier index of the secondary component carrier and a cell identity (Cell Identity, Cell ID) of a secondary serving cell working on the secondary component carrier are carried. In this case, the carrier and the cell may be considered to be the same conceptually, for example, accessing a carrier by the UE is equivalent to accessing a cell by the UE.

A method and an apparatus that are provided in the embodiments of this application may be applied to a terminal device or a network device. The terminal device or the network device includes a hardware layer, an operating system layer running above the hardware layer, and an application layer running above the operating system layer. The hardware layer includes hardware such as a central processing unit (Central Processing Unit, CPU), a memory management unit (Memory Management unit, MMU), and a memory (also referred to as a main memory). The operating system may be any one or more computer operating systems that process a service by using a process (Process), for example, a Linux operating system, a UNIX operating system, an Android operating system, an iOS operating system, and a Windows operating system. The application layer includes applications such as a browser, an address book, word processing software, and instant messaging software. Moreover, in the embodiments of this application, a specific structure of an entity performing a control information transmission method is not particularly limited in the embodiments of this application, provided that the entity can run a program that records code for performing the control information transmission method in the embodiments of this application, to perform communication according to the control information transmission method in the embodiments of this application. For example, the entity performing the wireless communication method may be the terminal device or the network device, or may be a functional module, in the terminal device or the network device, that can invoke and execute the program.

In addition, aspects or features in the embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (Compact Disc, CD) or a digital versatile disc (Digital Versatile Disc, DVD)), a smart card, and a flash memory component (for example, an erasable programmable read-only memory (Erasable Programmable Read-Only Memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

An existing communications system such as an LTE system is used as an example. In the prior art, the LTE system supports a hybrid automatic repeat request (Hybrid Automatic Repeat reQuest, HARQ) mechanism, and data transmission is classified into initial transmission (initial transmission) and retransmission (re-transmission). The initial transmission and retransmission may be scheduled by a physical downlink control channel (PDCCH). Using downlink data transmission as an example, the network device sends, to the terminal device, a PDCCH for scheduling initial transmission of downlink data. After detecting the PDCCH for initial transmission, the terminal device receives initially transmitted data, performs decoding based on the received initially transmitted data, and feeds back a decoding result to the sending device. If the decoding result indicates a failure and the network device correctly receives a feedback signal from the terminal device, the network device may send, to the terminal device, a PDCCH for scheduling retransmission. After detecting the PDCCH for retransmission, the terminal device receives retransmitted data, performs decoding based on the received initially transmitted data and retransmitted data, and feeds back a decoding result to the sending device. Uplink data transmission is similar to downlink data transmission. To be specific, regardless of initial transmission or retransmission, each time after the receiving device receives transmission data and completes corresponding decoding, the receiving device feeds back a receiving result to the receiving device. The sending device schedules retransmission after confirming that the receiving device feeds back a decoding failure.

A development trend of a communications system is using an increasingly complex networking mode, for example, hybrid networking of a macro base station and a small cell, to allow different duplex modes to be used at a same frequency band or adjacent frequency bands, and the like. This foregoing is to improve spectrum utilization and better utilize a limited quantity of spectrum resources. In such a development trend, radio signals are increasingly exposed to uneven interference during an actual transmission process. For example, actual transmission of data #α is seriously interfered with (the data #α is affected) (for ease of description, this scenario is referred to as a scenario #1), but only a small part of the data #α is interfered with (a time-frequency resource corresponding to the small part is an affected time-frequency resource). In addition, as communications technologies develop and new requirements on wireless communication for daily and industrial use in real life gradually emerge, a future communications system can support more diversified service types. Some emerging services impose obviously higher transmission latency requirements than a conventional service. For example, ultra-reliable and low latency communications (Ultra-reliable/low latency communication, URLLC) impose a higher transmission latency requirement than a conventional service (for example, an enhanced mobile broadband (Enhanced mobile broadband, eMBB) service). To satisfy a transmission requirement of a service imposing a relatively high transmission latency requirement, a time-frequency resource that has been allocated to another service can be occupied solely (in a scenario #2) or multiplexed (for example, in a superposition superposition manner) (in a scenario #3) to transmit this type of service. When the resource is multiplexed, for original eMBB data on the multiplexed resource, URLLC service data is actually a type of limited interference. For example, the data #α is eMBB service data. Only a small part of a time-frequency resource used to carry the data #α may be occupied or multiplexed (the data #α is affected) by a service having a relatively high latency requirement. In other words, during actual transmission, only a small part of the data #α is occupied or multiplexed (a time-frequency resource corresponding to the small part is an affected time-frequency resource).

Reduction in reliability of transmitting the small part of the data decreases a probability of correctly receiving all the data #α. If an existing feedback-based retransmission mechanism is used, the sending device retransmits the data #α based on feedback information only after learning that the receiving device fails in decoding. In this way, when only the small part of the data #α is affected, a transmission latency obviously increases. In addition, currently, retransmission is based on all the data #α, and consequently, when only the small part of the data is affected, retransmission of the data #α reduces spectrum utilization.

Control information sending and receiving methods are provided in the embodiments of this application to efficiently remedy an affected small part of data and effectively reduce a transmission latency of affected data #α.

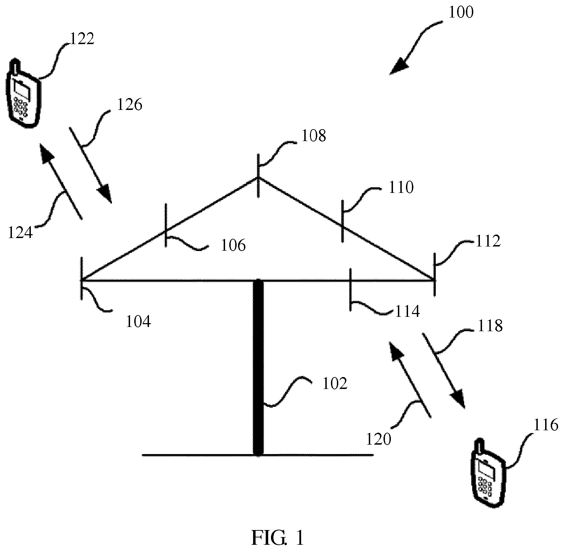

FIG. 1 is a schematic diagram of a wireless communications system according to an embodiment of this application. As shown in FIG. 1, the communications system 100 includes a network device 102. The network device 102 may include one or more antennas, such as antennas 104, 106, 108, 110, 112, and 114. In addition, the network device 102 may additionally include a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

The network device 102 may communicate with a plurality of terminal devices (for example, a terminal device 116 and a terminal device 122). However, it can be understood that the network device 102 may communicate with any quantity of terminal devices similar to the terminal device 116 or the terminal device 122. Each of the terminal devices 116 and 122 may be, for example, a cellular phone, a smartphone, a portable computer, a handheld communications device, a handheld computing device, a satellite radio apparatus, a global positioning system, a PDA, and/or any other appropriate device that is used for communication in the wireless communications system 100.

As shown in FIG. 1, the terminal device 116 communicates with the antennas 112 and 114. The antennas 112 and 114 send information to the terminal device 116 over a forward link (also referred to as a downlink) 118, and receive information from the terminal device 116 over a reverse link (also referred to as an uplink) 120. In addition, the terminal device 122 communicates with the antennas 104 and 106. The antennas 104 and 106 send information to the terminal device 122 over a forward link 124, and receive information from the terminal device 122 over a reverse link 126.

For example, in a frequency division duplex (Frequency Division Duplex, FDD) system, the forward link 118 may use a frequency band different from that used by the reverse link 120, and the forward link 124 may use a frequency band different from that used by the reverse link 126.

For another example, in a time division duplex (Time Division Duplex, TDD) system and a full duplex (Full Duplex) system, the forward link 118 and the reverse link 120 may use a same frequency band, and the forward link 124 and the reverse link 126 may use a same frequency band.

Each antenna (or an antenna group including a plurality of antennas) and/or an area designed for communication are/is referred to as a sector of the network device 102. For example, the antenna group may be designed to communicate with a terminal device in the sector of a coverage area of the network device 102. The network device may send, by using single-antenna or multi-antenna transmit diversity, a signal to all terminal devices in the sector corresponding to the network device. During a process in which the network device 102 communicates with the terminal devices 116 and 122 over the forward links 118 and 124 respectively, a transmit antenna of the network device 102 may improve signal-to-noise ratios of the forward links 118 and 124 through beamforming. In addition, compared with a manner in which the network device sends signals to all corresponding terminal devices by using the single-antenna or multi-antenna transmit diversity, in this manner, when the network device 102 sends, through beamforming, signals to the terminal devices 116 and 122 randomly distributed in the related coverage area, interference caused to a mobile device in a neighboring cell is smaller.

At a given time, the network device 102, the terminal device 116, or the terminal device 122 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or store into a memory) a specific quantity of data bits to be sent to the wireless communications receiving apparatus through a channel. The data bits may be included in a data transport block (or a plurality of transport blocks), and the transport block may be segmented to generate a plurality of code blocks.

In addition, the communications system 100 may be a PLMN network, a D2D network, an M2M network, or another network. FIG. 1 is merely a simplified schematic diagram used as an example. The network may further include another network device not shown in FIG. 1.

In this embodiment of this application, control information may be transmitted between the network device and a plurality of terminal devices, and processes of transmitting control information between the network device and the terminal devices are similar. For ease of understanding, the following uses a process of transmitting control information between the network device and a terminal device #A, as an example for description.

In this embodiment of this application, control information (for example, including first control information and second control information) is information used to control transmission of an information block (specifically, a modulation symbol generated by encoding and modulating the information block). For example, the control information may include information used to indicate a resource (for example, a time-frequency resource) for transmitting the information block, information used to indicate a modulation and coding scheme for the information block, information used to indicate whether the information block is initially transmitted or retransmitted, information used to indicate a hybrid automatic repeat request (Hybrid Automatic Repeat reQuest, HARQ) process corresponding to the information block, information used to indicate a resource used by feedback information for the information block, and the like. The information about the resource for transmitting the information block may be location information of the resource, for example, start and end sequence numbers of a time domain location, a frequency domain location, or a time-frequency domain location. More specifically, the information about the resource for transmitting the information block is a start location (a sequence number of a time domain unit with a minimum sequence number included in the time-frequency resource) and/or an end location (a sequence number of a time domain unit with a maximum sequence number included in the time-frequency resource) of the time-frequency resource in time domain, and a start location (a sequence number of a frequency domain unit with a minimum sequence number included in the time-frequency resource) and/or an end location (a sequence number of a frequency domain unit with a maximum sequence number included in the time-frequency resource) of the time-frequency resource in frequency domain. The information about the resource for transmitting the information block may alternatively be size information of the time-frequency resource (for example, a quantity of time domain resource units occupied by the resource in time domain and a quantity of frequency domain resource units occupied by the resource in frequency domain). In an example, the information about the resource for transmitting the information block may be a start location and a size of the time-frequency resource in frequency domain, and a start location and an end location of the time-frequency resource in time domain. In another example, the information about the resource for transmitting the information block may be a start location and a size of the time-frequency resource in frequency domain, and a sequence number of an occupied time domain unit. The frequency domain unit may be a resource block RB (Resource block), a resource block group RBG (Resource block group), or a predefined subband (Subband). The time domain unit may be a symbol, a mini-slot (Mini-slot), a slot (slot), or a subframe (subframe). Duration of one subframe in time domain may be 1 millisecond (ms), one slot includes 7 or 14 symbols, and one mini-slot may include at least one symbol (for example, 2, 7, or 14 symbols, or symbols of any quantity less than or equal to 14).

In this embodiment of this application, the information block may include at least one transport block (Transport Block, TB), at least one TB group (including at least one TB), at least one code block (Code Block, CB), at least one CB group (including at least one CB), or the like. This is not particularly limited in this application, and any other data division unit that can be used as a coding and modulation object falls within the protection scope of this application. For ease of understanding and description, the following uses a TB as the information block to detail a specific process of the control information transmission method in this application.

In this embodiment of this application, a plurality of pieces of control information for a plurality of data division units (for example, TBs) may be transmitted between the network device and the terminal device #A, and processes for generating and transmitting the TBs are similar. For ease of understanding, the following uses a process of transmitting control information for a TB#A between the network device and the terminal device #A, as an example for description.

In addition, in this embodiment of this application, the TB#A may need to be sent by the network device to the terminal device, or the TB#A may need to be sent by the terminal device to the network device, or the TB#A may be transmitted between two terminal devices. This is not particularly limited in this application.

In other words, in this embodiment of this application, the control information (including the first control information and the second control information) may be control information for uplink transmission, the control information (including the first control information and the second control information) may be control information for downlink transmission, or the control information (including the first control information and the second control information) may be control information for D2D, M2M, or V2V communication. This is not particularly limited in this application.

For ease of understanding and description, the following provides descriptions by using an example in which the control information is used to control transmission of the TB#A between the network device and the terminal device #A.

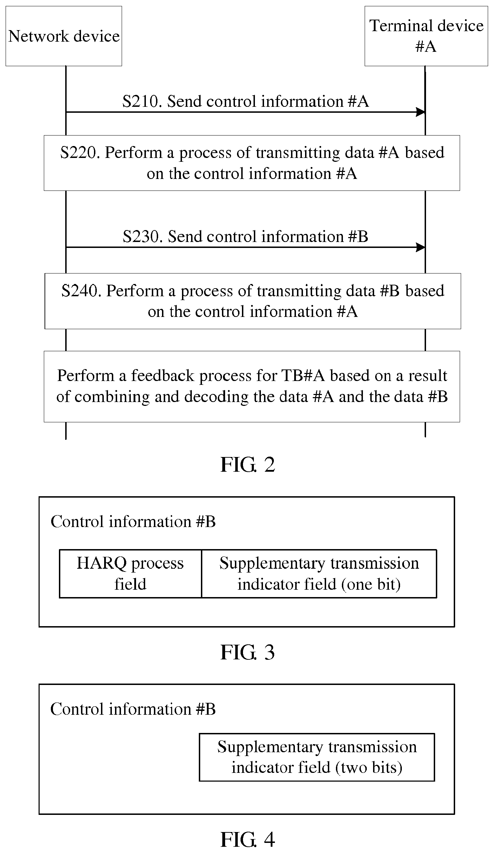

FIG. 2 is a schematic interaction diagram of a method 200 for transmitting the control information for the TB#A between the network device and the terminal device #A.

S210. After determining that transmission (for example, uplink transmission or downlink transmission) of the TB#A (that is, an example of a first information block) needs to be performed between the network device and the terminal device #A, the network device may generate control information #A (that is, an example of the first control information) for the TB#A.

The control information #A include indication information of a time-frequency resource #A (that is, an example of a first time-frequency resource) and information used to indicate whether the TB#A is initially transmitted or retransmitted (that is, an example of first indication information, which is marked as information #A in the following for ease of understanding and description).

Moreover, as an example rather than a limitation, the information used to indicate whether the TB#A is initially transmitted or retransmitted (that is, the information #A) may be information carried in a new data indicator (New Data Indicator, NDI) field in the control information #A, or may be carried in another field, for example, a scheduling indicator (Scheduling indicator) field or a data transmission indicator (Data transmission indicator) field.

It should be understood that the foregoing information included in the control information #A is only an example for description, and this application is not limited thereto. A format and included content of the control information #A may be the similar to those of downlink control information (Downlink Control Information, DCI) in the prior art. Herein, to avoid repetition, details are omitted.

S220. The network device and the terminal device #A may transmit data #A (that is, an example of first data) on a time-frequency resource #A based on the control information #A, where the data #A may be determined based on a bit (marked as a bit #1 in the following for ease of understanding and differentiation) obtained by encoding (for example, performing channel coding on) the TB#A. For example, the data #A may include some bits in the bit #1, or the data #A may include all bits in the bit #1 (that is, an example of a first bit, which is marked as a bit #A in the following for ease of understanding and differentiation).

It should be understood that the foregoing manner for determining the data #A is only an example for description, and this application is not limited thereto. For example, the data #A may further include a bit obtained by encoding a TB other than the TB#A.

In addition, a process of transmitting the data #A may be: A sending device (for example, one party of the network device and the terminal device #A) generates a signal #A after performing modulation and mapping, and resource mapping on the data #A, and sends the signal #A to a receiving device (for example, the other party of the network device and the terminal device #A); and after receiving the signal #A, the receiving device restores the signal #A, for example, performs resource demapping, and demodulation and mapping to restore the data #A. To avoid repetition, the following omits descriptions of same or similar cases.

Moreover, as an example rather than a limitation, in this embodiment of this application, other data in addition to the data #A (that is, an example of the first data) may be further transmitted on the time-frequency resource #A. For example, a time-frequency resource #C (the time-frequency resource #C is detailed subsequently) in the time-frequency resource #A may further carry data #D, or the time-frequency resource #C may be further allocated to the data #D, or the time-frequency resource #A carries at least the data #A and the data #D.

S230. The network device sends control information #B (that is, an example of the second control information) to the terminal device #A, where the control information #B include indication information of a time-frequency resource #B (that is, an example of a second time-frequency resource).

Data carried on the time-frequency resource #B is first described.

In this embodiment of this application, the time-frequency resource #B is allocated at least to data #B (that is, an example of second data), or the time-frequency resource #B carries at least the data #B.

In this embodiment of this application, the data #B may be determined based on the bit #1. For example, the data #B may be some or all bits in the bit #1 (that is, an example of a second bit, which is marked as a bit #B in the following for ease of understanding and differentiation).

As an example rather than a limitation, the bit #B and the bit #A may be completely or partially the same in this embodiment of this application.

For another example, the bit #B and the bit #A may be completely different in this embodiment of this application. For example, the data #B and the data #A may be corresponding to encoded bits in different locations in the bit #1 stored in a soft buffer, and the two parts of encoded bits do not overlap with each other in the soft buffer.

In this embodiment of this application, the data #B includes a bit obtained by encoding the TB#A, and the data #B is different from the data #A, or the bit #B includes some or all bits in the bit #1 except the bit #A.

In addition, in this embodiment of this application, the data #B may include some or all bits in the data #A; or the data #A may not include any bit in the data #B; or for example, when the bit #1 is not all bits obtained by encoding the TB#A, the data B may further include a bit, other than the bit #1, in the bits obtained by encoding the TB#A. This is not particularly limited in this application.

It should be noted herein that in this embodiment of this application, an HARQ process corresponding to the data #B is the same as an HARQ process corresponding to the data #A.

Moreover, the "HARQ process corresponding to the data #B" may be an HARQ process used to perform transmission (including initial transmission and retransmission) processing on the data #B (or an information block to which the data #B belongs). Similarly, the "HARQ process corresponding to the data #A" may be an HARQ process used to perform transmission (including initial transmission and retransmission) processing on the data #A (or an information block to which the data #A belongs). To avoid repetition, the following omits descriptions of same or similar cases.

The HARQ process corresponding to the data #B (or the data #A) is marked as an HARQ process #1 in the following for ease of understanding and differentiation.

Optionally, in this embodiment of this application, the time-frequency resource #B may be further allocated to data #C (that is, an example of third data), or the time-frequency resource #B carries at least the data #B and the data #C.

In this embodiment of this application, the data #C may not belong to the bit #1 (that is, a case 1). Specifically, in this embodiment of this application, the data #C may be determined based on a bit (marked as a bit #2 in the following for ease of understanding and differentiation) obtained by encoding (for example, performing channel coding on) a TB#B (that is, an example of a second information block). For example, the data #C may be some bits in the bit #2 or include all bits in the bit #2. It should be understood that the foregoing manner for determining the data #C is only an example for description, and this application is not limited thereto. For example, the data #C may further include a bit obtained by encoding a TB other than the TB#B and the TB#A.

Alternatively, in this embodiment of this application, the data #C may belong to the bit #1 (that is, a case 2). For example, the data #C may be retransmitted data of the data #A.

In summary, in this embodiment of this application, the time-frequency resource #B may be used in the following manners.

Manner 1: The time-frequency resource #B is used to carry only the data #B.

Manner 2: The time-frequency resource #B is used to carry the data #B and the data #C. The information block to which the data #C belongs (for example, the TB#B) is different from the information block to which the data #A belongs (for example, the TB#A), or an HARQ process corresponding to the data #C (marked as an HARQ process #2 in the following for ease of understanding and description) is different from the HARQ process corresponding to the data #A (that is, the HARQ process #1).

Manner 3: The time-frequency resource #B is used to carry the data #B and the data #C. The data #C is the retransmitted data of the data #A. In other words, the HARQ process #2 is the same as the HARQ process #1.

In this embodiment of this application, the control information #B further includes information #B (that is, an example of second indication information) used to indicate that the second time-frequency resource carries supplementary transmission (Supplementary transmission) of the data #A, that is, the data #B. More specifically, the information #B is used to indicate that feedback information for the TB#A (that is, an example of feedback information for the first information block) needs to be determined based on a result of combining and decoding the data #A and the data #B. The supplementary transmission may also be referred to as continuous transmission (continuous transmission) or partial transmission (partial transmission). A specific name thereof is merely for ease of description, and this embodiment of this application is not limited thereto.

The determining feedback information for the TB#A based on a result of combining and decoding the data #A and the data #B may be: determining the feedback information by combining and decoding only the data #A and the data #B (the information #A indicates that the data #A is initial transmission of the TB#A), or determining the feedback information by combining and decoding the data #B, the data #A, and other transmission data that is corresponding to the TB#A and that is prior to the data #A (the information #A indicates that the data #A is retransmission of the TB#A).

Optionally, the information #B is further used to indicate not to feed back feedback information for the TB#A, that is determined based on a result of decoding the data #A and that is corresponding to the control information #A.

The information #A indicates that the data #A is initial transmission of the TB#A and indicates not to decode the data #A. Alternatively, the information #A indicates that the data #A is retransmission of the TB#A, indicates not to combine and decode other transmission data that is corresponding to the TB#A and that is prior to the data #A, and indicates not to feed back the feedback information that is determined based on the result of decoding the data #A and that is corresponding to the control information #A. In other words, before the data #B is received, data related to the TB#A is not decoded, and the feedback information for the TB#A, corresponding to the control information #A is not fed back. The "feedback information for the TB#A, that is determined based on a result of decoding the data #A and that is corresponding to the control information #A" may be: The control information #A indicates sending or receiving of the data #A, and further instructs a receiving device to decode the data #A (the information #A indicates that the data #A is initial transmission of the TB#A), or combine and decode the data #A and other transmission data that is corresponding to the TB#A and that is prior to the data #A (the information #A indicates that the data #A is retransmission of the TB#A), and to determine the feedback information for the TB#A based on the decoding result. In addition, the control information #A may further include a time-frequency resource used to send "the feedback information for the TB#A, that is determined based on the result of decoding the data #A and that is corresponding to the control information #A".

Moreover, in this embodiment of this application, the information #B is located in a specified location in the control information #B, so that the terminal device #A can identify the information #B based on the specified location.

Alternatively, in this embodiment of this application, the information #B has specified content (for example, a bit sequence (for example, including one or more bits) specified by a communications system or a communication protocol), so that the terminal device #A can identify the information #B based on the specified content.

Therefore, for example, when the terminal device #A serves as a device for receiving data (for example, the data #A and the data #B), the terminal device #A can determine, based on the information #B, that the data #A and the data #B need to be combined and decoded, and determine the feedback information for the TB#A based on the result of combination and decoding.

For another example, when the terminal device #A serves as a device for sending data (for example, the data #A and the data #B), the terminal device #A can determine, based on the information #B, that the network device or another terminal device needs to combine and decode the data #A and the data #B, and to determine the feedback information for the TB#A based on the result of combination and decoding, so that the terminal device #A can determine that the data #B needs to be sent on the time-frequency resource #B.

As an example rather than a limitation, a plurality of fields (that is, an example of a preset field) may be specified in the control information used by the communications system (including the control information #A and the control information #B), and a function of each field (or specific content indicated by each field) may be specified by the communications system or the communication protocol. In this embodiment of this application, the information #B may be carried in a field #A (that is, an example of a first preset field) in the control information #B, and the information #A may be carried in a field #A in the control information #A.

It should be understood that the foregoing location of the information #B in the control information #B (or a field carrying the information #B) is only an example for description. For example, as specified by the communications system or the communication protocol, one field may be selected from a reserved field in the control information as the field specifically used to carry the information #B.

As an example rather than a limitation, in this embodiment of this application, the information #B may be transmitted in any one of the following manners.

### Manner a:

FIG. 3 is a schematic diagram of an example of the information #B according to an embodiment of this application. As shown in FIG. 3, in this embodiment of this application, a field used to carry the information #B may include one bit. The field used to carry the information #B is referred to as a "supplementary transmission indicator (Supplementary transmission indicator) field", a continuous transmission indicator (continuous transmission) field, or a partial transmission indicator (partial transmission indicator) field in the following for ease of understanding.

As an example rather than a limitation, for example, when a supplementary transmission indicator field in control information (for example, control information #Z) carries a bit "0", the terminal device may determine that the control information #Z does not indicate supplementary transmission, that is, no supplementary transmission data is scheduled by the control information #Z.

More specifically, the terminal device has determined that there is previously transmitted control information (for example, control information #Y) corresponding to the control information #Z, and the bit "0" carried in the supplementary transmission indicator field indicates that data scheduled by the control information #Y and data scheduled by the control information #Z do not need to be combined and decoded; or the terminal device may determine that the control information #Z has not scheduled supplementary transmission data related to the data (data #Y) scheduled by the control information #Y Optionally, in this case, the terminal device confirms that data #Y has no supplementary transmission data, and transmission of an HARQ process corresponding to the data #Y may be performed in a new transmission/retransmission mode; or the terminal device has determined that there is control information #Y, and the bit "0" carried in the supplementary transmission indicator field indicates that the control information #Z received this time is not control information corresponding to the control information #Y; or the bit "0" carried in the supplementary transmission indicator field indicates that there is no control information #Y corresponding to the control information #Z. A method and a process for determining, by the terminal device, whether control information is corresponding to other control information (for example, whether the control information #Z is corresponding to the control information #Y) are detailed later.

For another example, when a bit carried in a supplementary transmission indicator field in control information (for example, the control information #B) is "1", the terminal device may determine that data (for example, the data #A) scheduled by control information received last time (for example, the control information #A) and data (for example, the data #B) scheduled by the control information received this time need to be combined and decoded; or the terminal device may determine that the control information #B schedules the supplementary transmission data #B of the data #A, and determine the feedback information for the TB#A based on the result of combining and decoding the data #A and the data #B. For example, when the bit carried in the supplementary transmission indicator field in the control information #B is "1", the terminal device may determine that the control information #B carries the information #B, and the terminal device may determine, based on the bit "1" (that is, an example of the information #B) carried in the supplementary transmission indicator field in the control information #B, that the feedback information for the TB#A (that is, an example of the feedback information for the first information block) needs to be determined based on the result of combining and decoding the data #A and the data #B.

In addition, as described above, the data #B and the data #A are corresponding to a same HARQ process (that is, the HARQ process #1).

In addition, in this embodiment of this application, the control information #B may further include an HARQ field, where information carried in the HARQ field can uniquely indicate an HARQ process. The HARQ process indicated by the HARQ field in the control information #B is marked as an HARQ process #3 in the following for ease of understanding.

For example, if the bit carried in the supplementary transmission indicator field in the control information #B is "1" (that is, the control information #B includes the information #B), and the HARQ process (that is, the HARQ process #3) indicated by the HARQ field in the control information #B is the same as the HARQ process #1, the terminal device may determine that the control information #B schedules only the data #B, or the HARQ field in the control information #B is used to indicate the HARQ process of the data #B.

For another example, if the bit carried in the supplementary transmission indicator field in the control information #B is "1" (that is, the control information #B includes the information #B), and the HARQ process (that is, the HARQ process #3) indicated by the HARQ field in the control information #B is different from the HARQ process #1, the terminal device may determine that the control information #B schedules other data in addition to the data #B, for example, the data #C. It should be noted that in this case, the HARQ process #3 is the same as the HARQ process #2, or the HARQ field in the control information #B is used to indicate an HARQ process of the data #C.

To be specific, in the manner a, the manner 1 and the manner 2 for using the time-frequency resource #B can be indicated. In other words, based on the 1-bit information #B and the HARQ field, the terminal device #A can determine whether:
the time-frequency resource #B is used to carry only the data #B; or
the time-frequency resource #B is used to carry the data #B and the data #C.

### Manner b:

FIG. 4 is a schematic diagram of another example of the information #B according to an embodiment of this application. As shown in FIG. 4, in this embodiment of this application, a field (that is, the supplementary transmission indicator field) used to carry the information #B may include two bits.

As an example rather than a limitation, for example, when a supplementary transmission indicator field in control information (for example, control information #Z) carries a bit "00", the terminal device may determine that the control information #Z does not indicate supplementary transmission, that is, no supplementary transmission data is scheduled by the control information #Z. A more specific example is similar to a case in which "the supplementary transmission indicator field carries a bit 0" in the reference manner a. Details are not described herein again.

For another example, when a bit carried in a supplementary transmission indicator field in control information (for example, the control information #B) is "01", the terminal device may determine that data (for example, the data #A) scheduled by control information received last time (for example, the control information #A) and data (for example, the data #B) scheduled by the control information received this time need to be combined and decoded. For example, when the bit carried in the supplementary transmission indicator field in the control information #B is "01", the terminal device may determine that the control information #B carries the information #B, and the terminal device may determine, based on the bit "01" (that is, an example of the information #B) carried in the supplementary transmission indicator field in the control information #B, that feedback information for the TB#A (that is, an example of the feedback information for the first information block) needs to be determined based on a result of combining and decoding the data #A and the data #B; or the terminal device may determine that the control information #B schedules the supplementary transmission data #B of the data #A, and determine the feedback information for the TB#A based on the result of combining and decoding the data #A and the data #B.

In addition, when a bit carried in a supplementary transmission indicator field in control information (for example, the control information #B) is "01", the terminal device may determine that a time-frequency resource indicated by the control information is further used to carry data in addition to the data used for combination and decoding. For example, when the bit carried in the supplementary transmission indicator field in the control information #B is "01", the terminal device may determine that the time-frequency resource #B is further used to carry data (for example, the data #C) in addition to the data #B.

Moreover, when a bit carried in a supplementary transmission indicator field in control information (for example, the control information #B) is "01", the terminal device may determine that an HARQ process corresponding to data other than the data used for combination and decoding is different from an HARQ process corresponding to the data used for combination and decoding. For example, when the bit carried in the supplementary transmission indicator field in the control information #B is "01", the terminal device may determine that the HARQ process (that is, the HARQ process #3) corresponding to the data #C is different from the HARQ process (that is, the HARQ process #1) corresponding to the data #A.

In this case, in this embodiment of this application, the control information #B may further include an HARQ field, where information carried in the HARQ field can uniquely indicate an HARQ process. In this case, the HARQ process indicated by the HARQ field in the control information #B is the HARQ process #3.

For another example, when a bit carried in a supplementary transmission indicator field in control information (for example, the control information #B) is "10", the terminal device may determine that data scheduled by control information received last time and data scheduled by the control information received this time need to be combined and decoded. For example, when the bit carried in the supplementary transmission indicator field in the control information #B is "10", the terminal device may determine that the control information #B carries the information #B, and the terminal device may determine, based on the bit "10" (that is, an example of the information #B) carried in the supplementary transmission indicator field in the control information #B, that feedback information for the TB#A (that is, an example of the feedback information for the first information block) needs to be determined based on a result of combining and decoding the data #A and the data #B; or the terminal device may determine that the control information #B schedules the supplementary transmission data #B of the data #A, and determine the feedback information for the TB#A based on the result of combining and decoding the data #A and the data #B.

In addition, when a bit carried in a supplementary transmission indicator field in control information (for example, the control information #B) is "10", the terminal device may determine that a time-frequency resource indicated by the control information is further used to carry data in addition to the data used for combination and decoding. For example, when the bit carried in the supplementary transmission indicator field in the control information #B is "10", the terminal device may determine that the time-frequency resource #B is further used to carry data (for example, the data #C) in addition to the data #B.

Moreover, when a bit carried in a supplementary transmission indicator field in control information (for example, the control information #B) is "10", the terminal device may determine that an HARQ process corresponding to data other than the data used for combination and decoding is the same as an HARQ process corresponding to the data used for combination and decoding. For example, when the bit carried in the supplementary transmission indicator field in the control information #B is "10", the terminal device may determine that the HARQ process (that is, the HARQ process #3 or the HARQ process #2) corresponding to the data #C is the same as the HARQ process (that is, the HARQ process #1) corresponding to the data #A.

In this case, in this embodiment of this application, the HARQ field in the control information #B may be empty, or the HARQ field in the control information #B may be used to carry other information.

In addition, in this case, the data #C may be retransmitted data of the data #A, and the feedback information for the TB#A may be determined based on a result of combining and decoding the data #A, the data #B, and the data #C.

For another example, when a bit carried in a supplementary transmission indicator field in control information (for example, the control information #B) is "11", the terminal device may determine that data scheduled by control information received last time and data scheduled by the control information received this time need to be combined and decoded. For example, when the bit carried in the supplementary transmission indicator field in the control information #B is "10", the terminal device may determine that the control information #B carries the information #B, and the terminal device may determine, based on the bit "11" (that is, an example of the information #B) carried in the supplementary transmission indicator field in the control information #B, that feedback information for the TB#A (that is, an example of the feedback information for the first information block) needs to be determined based on a result of combining and decoding the data #A and the data #B; or the terminal device may determine that the control information #B schedules the supplementary transmission data #B of the data #A, and determine the feedback information for the TB#A based on the result of combining and decoding the data #A and the data #B.

In addition, when a bit carried in a supplementary transmission indicator field in control information (for example, the control information #B) is "11", the terminal device may determine that a time-frequency resource indicated by the control information is used to carry only the data used for combination and decoding.

In this case, in this embodiment of this application, the HARQ field in the control information #B may be empty, or the HARQ field in the control information #B may be used to carry other information.

In this case, in this embodiment of this application, the control information #B may further include an HARQ field, where information carried in the HARQ field can uniquely indicate an HARQ process. In this case, the HARQ process indicated by the HARQ field in the control information #B is the HARQ process #1.

To be specific, in the manner b, the manner 1, the manner 2, and the manner 3 for using the time-frequency resource #B can be indicated. In other words, based on the 2-bit information #B, the terminal device #A can determine whether:
the time-frequency resource #B is used to carry only the data #B; or
the time-frequency resource #B is used to carry the data #B and the data #C; and
the HARQ process corresponding to the data #B (or the data #A) is the same as the HARQ process corresponding to the data #C.

### Manner c:

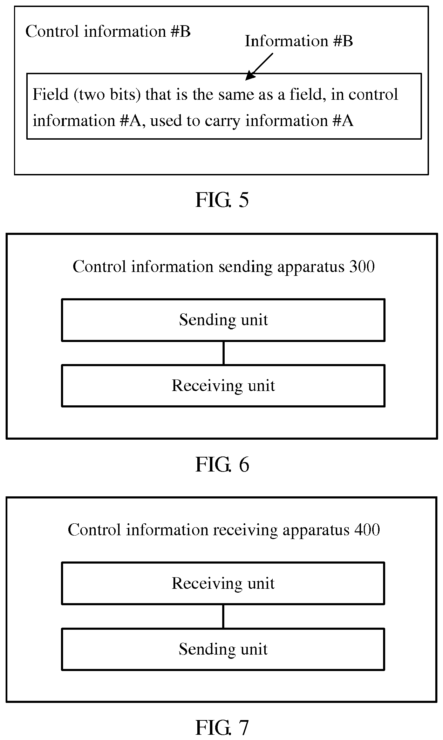

FIG. 5 is a schematic diagram of still another example of the information #B according to an embodiment of this application. As shown in FIG. 5, in this embodiment of this application, a field (that is, the supplementary transmission indicator field) used to carry the information #B and a field used to carry the information #A may be same preset fields (for example, a field #A). The information #B may be carried in a field #A (that is, an example of a first preset field) in the control information #B, and the information #A may be carried in a field #A in the control information #A. The field #A may include two bits.

As an example rather than a limitation, for example, when a supplementary transmission indicator field in control information (for example, control information #X) carries a bit "01" or "10" (an example of the information #A), the terminal device may determine that the control information #X does not indicate supplementary transmission, that is, no supplementary transmission data is scheduled by the control information #X. More specifically, the control information #X includes the information #A (that is, an example of first indication information), and the information #A is used to indicate whether data scheduled by the control information #X (for example, data #X) is initial transmission or retransmission of an information block corresponding to the data (for example, an information block #X). More specifically, the information #A indicates initial transmission or retransmission of the information block #X based on inversion between a bit "01" and a bit "10" for the field #A. For example, the control information #X schedules initial transmission of the information block #X, and in an HARQ process corresponding to the information block #X (an HARQ process #X), a field #A in control information #(X-1) that schedules last transmission is "01" and a field #A in the control information #X is "10". A change of the field #A from "01" to "10" indicates that the control information #X schedules initial transmission of the information block #X, and transmission of a previous information block #(X-1) in the HARQ process #X has been completed. That transmission of the information block #(X-1) has been completed means that the information block #(X-1) is discarded when a maximum quantity of retransmission times is reached or is correctly received. Before transmission of the information block #X is completed, the field #A in the control information #X corresponding to the HARQ process #X is always "10". After transmission of the information block #X is completed, control information #(X+1) schedules initial transmission of an information block #(X+1), and a field #A in the control information #(X+1) is "01". A change of the field #A from "10" to "01" indicates that the control information #X schedules initial transmission of the information block #X, and transmission of the previous information block #(X-1) in the HARQ process #X has been completed.

For another example, when a bit carried in a field #A in control information (for example, the control information #B) is "11" (that is, an example of second indication information), the terminal device may determine that data (for example, the data #A) scheduled by control information received last time (for example, the control information #A) and data (for example, the data #B) scheduled by the control information received this time need to be combined and decoded. In this case, the control information #A is control information that schedules transmission last time in a same HARQ process. For example, when the bit carried in the field #A in the control information #B is "11", the terminal device may determine that the control information #B carries the information #B, and the terminal device may determine, based on the bit "11" (that is, an example of the information #B) carried in the field #A in the control information #B, that feedback information for the TB#A (that is, an example of the feedback information for the first information block) needs to be determined based on a result of combining and decoding the data #A and the data #B; or the terminal device may determine that the control information #B schedules the supplementary transmission data #B of the data #A, and determine the feedback information for the TB#A based on the result of combining and decoding the data #A and the data #B.

In this case, in this embodiment of this application, control information (for example, the control information #A or the control information #B) may include a plurality of fields #A, and one field #A is corresponding to one piece of scheduled data.

Moreover, as an example rather than a limitation, the field #A may be information carried in an NDI field in the control information #B.

It should be understood that the foregoing specific values of the bit corresponding to the information #B are only examples for description, and this application is not limited thereto. The bit corresponding to the information #B may be set to any value, provided that the terminal device can identify, based on the information #B, a manner for using the time-frequency resource #B (for example, the manner 1, the manner 2, or the manner 3).

In addition, it should be understood that the foregoing specific formats of the information #B are only examples for description, and this application is not limited thereto. For example, the information #B may alternatively include at least three bits, provided that the terminal device can determine, based on the information #B, that the feedback information for the TB#A needs to be determined based on the result of combining and decoding the data #A and the data #B.

It should be understood that the foregoing manner in which the network device and the terminal device negotiate on whether the feedback information for the TB#A needs to be determined based on the result of combining and decoding the data #A and the data #B (that is, indicated by the information #B) is only an example for description, and this application is not limited thereto. For example, the terminal device and the network device may alternatively use the following method to determine whether the feedback information for the TB#A needs to be determined based on the result of combining and decoding the data #A and the data #B.

For example, after receiving control information (for example, the control information #A), the terminal device starts a timer; and before the timer times out, the terminal device receives other control information (for example, the control information #B), and an HARQ process corresponding to data (for example, the data #A) scheduled by the control information #A is the same as an HARQ process corresponding to data (for example, the data #B) scheduled by the control information #B. In this case, the terminal device may determine that feedback information for the TB#A (that is, an example of the feedback information for the first information block) needs to be determined based on a result of combining and decoding the data #A and the data #B; or the terminal device may determine that the control information #B schedules the supplementary transmission data #B of the data #A, and determine the feedback information for the TB#A based on the result of combining and decoding the data #A and the data #B.

Optionally, the feedback message for the TB#A, which is determined based on the result of combining and decoding the data #A and the data #B, is sent in a location of a time-frequency resource (and/or a location of a bit in a feedback message), where the time-frequency resource is used to send feedback information and is indicated by the control information #B.

Further, optionally, the feedback message for the TB#A is not fed back on a time-frequency resource (and/or a location of a bit in a feedback message) based on a result of decoding the data #A, where the time-frequency resource is used to send the feedback information and is indicated by the control information #A.

In addition, duration of the timer may be predefined by a standard, for example, HARQ feeds back a maximum latency for corresponding transmission; or may be configured by using RRC (Radio Resource Control) layer signaling.

For another example, the terminal device has determined that there is control information (for example, the control information #B) corresponding to previous control information (for example, the control information #A), and therefore the first piece of control information that is received by the terminal device after the control information #A and that has a same transmission scheduling direction as the control information #A is the control information #B. The terminal device may determine that feedback information for the TB#A (that is, an example of the feedback information for the first information block) needs to be determined based on a result of combining and decoding the data #A and the data #B; or the terminal device may determine that the control information #B schedules the supplementary transmission data #B of the data #A, and determine the feedback information for the TB#A based on the result of combining and decoding the data #A and the data #B.

Optionally, the feedback message for the TB#A, which is determined based on the result of combining and decoding the data #A and the data #B, is sent in a location of a time-frequency resource (and/or a location of a bit in a feedback message), where the time-frequency resource is used to send feedback information and is indicated by the control information #B.

Further, optionally, the feedback message for the TB#A is not fed back on a time-frequency resource (and/or a location of a bit in a feedback message) based on a result of decoding the data #A, where the time-frequency resource is used to send the feedback information and is indicated by the control information #A. In summary, in this embodiment of this application, the information #B may be implicitly indicated (an example of the second indication information), or content indicated by the information #B may be determined by the network device and the terminal device according to a preset rule.

Moreover, in addition to the information #B and the indication information of the time-frequency resource #B, the control information #B may include other information. As an example rather than a limitation, the control information #B may further include one or more of the following information or fields:
1. a modulation scheme;
2. a quantity of bits of original information;
3. a channel code rate, where
   one, two, or three of the foregoing information may specifically indicate, for example, an MCS sequence number or a TBS sequence number and is obtained based on a quantity of allocated resources or allocated resource block groups (which is obtained by using the following information 10); or may specifically indicate, for another example, a modulation scheme or a channel code rate and is obtained based on a quantity of allocated resources or allocated resource block groups; or may specifically indicate a modulation scheme and a quantity of bits of original information and is obtained based on a quantity of allocated resources or allocated resource block groups;
4. information related to a start location in a soft buffer (soft buffer), such as a redundancy version number (RV, redundancy version);
5. information about a time-frequency resource for scheduling transmission;
6. a new data indicator (NDI, New data indicator);
7. an HARQ process sequence number;
8. a downlink assignment index (DAI, Downlink Assignment Index);
9. a transmission manner, including but not limited to:
   a. precoding matrix information;
   b. a quantity of transmission layers;
   c. a transmission mode; and
   d. an antenna port;
10. uplink power control information;
11. information related to a signal transmission resource, including but not limited to:
   a signal transmission resource indication method; and
   frequency hopping-related indication information;
12. pilot-related information, including but not limited to an orthogonal cover code (Orthogonal Cover Code, OCC) sequence number;
13. a channel state information (Channel State Information, CSI) request;
14. a sounding reference signal (Sounding Reference Signal, SRS) request; and
15. (for example, during downlink transmission) a resource location fed back by HARQ.

It should be noted that when the time-frequency resource #B is used to carry the data #B and the data #C, other information (referred to as additional information in the following for ease of understanding and description) included in the control information #B different from the information #B and the indication information of the time-frequency resource #B may be information used for the data #C (or used for transmission of the data #C), and the additional information used for the data #B (or used for transmission of the data #C) may be the same as additional information for the data #C.

Alternatively, when the time-frequency resource #B is used to carry the data #B and the data #C, the control information #B may include the additional information for the data #C and the additional information for the data #B.

The following details a modulation scheme for the data #B in this embodiment of this application.

For example, the modulation scheme used for the data #B may be the same as that used for the data #A.

For another example, when the time-frequency resource #B is used to carry only the data #B, the control information #B may further include information #C (an example of fourth indication information), where the information #C is used to indicate the modulation scheme for the data #B.

For still another example, when the time-frequency resource #B is used to carry the data #B and the data #C, the control information #B may further include the information #C, where the information #D is used to indicate a modulation scheme for the data #C, and in this case, the modulation scheme for the data #B may be the same as that for the data #C.

It should be noted that in this embodiment of this application, all control information including the control information #A and the control information #B may include a modulation scheme indicator field. In this case, the information #C or information D may be carried in a modulation scheme indicator field of the control information #B. It should be noted that in this embodiment of this application, S230 may be performed before or after S220. This is not particularly limited in this application.

Therefore, by performing S230, the terminal device #A may determine that the data #B needs to be transmitted (for example, between the terminal device #A and the network device or another terminal device), and the terminal device may determine that the feedback information for the TB#A needs to be determined based on the result of combining and decoding the data #A and the data #B.

For example, in this embodiment of this application, a device for receiving the data #A (for example, one party of the network device and the terminal device) may store the data #A into a buffer, and performs unsetting (or empty) processing on the data #A (specifically, data, in the data #A, corresponding to the time-frequency resource #C) based on indication information #B, to unset the data, in the data #A, corresponding to the time-frequency resource #C. Then, the receiving device may combine and decode the data #A on which the unsetting processing has been performed and the data #B.

For another example, in this embodiment of this application, the receiving device (for example, one party of the network device and the terminal device) may store data carried on the time-frequency resource #A (for example, including the data #A and the data #D) into the buffer; determine the data #D based on the time-frequency resource #C; and perform unsetting (or empty) processing on the data #D, to unset data, in data carried on the time-frequency resource #A, corresponding to the time-frequency resource #D. Then, the receiving device may combine and decode the data carried on the time-frequency resource #A (for example, the data #A) on which the unsetting processing has been performed and the data #B.

The unsetting data is: demodulating, by the receiving device after receiving the data (for example, the data #A or the data #D), a received signal to obtain information about a probability that the data includes a bit (or bit soft information). The bit probability information may be a probability that a bit is equal to 0 and/or 1, or a bit log-likelihood ratio (log-likelihood ratio, LLR). The LLR is defined as a log value of a ratio between a probability of a bit being 0 and a probability of the bit being 1. That LLR information of a bit is equal to 0 means that both a probability of the bit being 0 and a probability of the bit being 1 are 0.5. In other words, "unsetting" may mean that the receiving device does not use an "unset" bit during decoding. The unsetting data is eliminating impact of unset data before decoding. In other words, there is no prior information of the unset data during decoding. Both the probability of an unset bit being 0 and the probability of the unset bit being 1 are 0.5. Correspondingly, if the probability information rather than the LLR is used for decoding, "unsetting" is setting the probability of the unset data being 0 and the probability of the unset data being 1 to 0.5.

In addition, in this embodiment of this application, a method and a process for processing, by the receiving device, a received signal to obtain bit soft information corresponding to data may be similar to those in the prior art. Herein, to avoid repetition, details are omitted.

S240. A sending device (for example, one party of the terminal device #A, the network device, or another terminal device) may determine the data #B, and send the data #B by using the time-frequency resource #B; and the sending device (for example, another party of the terminal device #A, the network device, or the another terminal device) may determine feedback information for the TB#A based on a result of combining and decoding the data #A and the data #B, and send the feedback information to the sending device.

The following describes an example of a method and a process for determining the data #B.

For example, in this embodiment of this application, the data #B may be determined based on the time-frequency resource #C (that is, an example of a third time-frequency resource). In this embodiment of this application, in time domain, the time-frequency resource #C (that is, an example of the third time-frequency resource) may include at least one symbol, at least one mini-slot, at least one slot, or at least one subframe. In frequency domain, the third time-frequency resource may include at least one resource block, at least one resource block group, or at least one predefined subband.

In this embodiment of this application, the time-frequency resource #C is a part of the time-frequency resource #A.

Specifically, the data #B is data corresponding to the time-frequency resource #C. For example, the data #B is a bit, in the bit #1, mapped to the time-frequency resource #C.

Moreover, as an example rather than a limitation, the time-frequency resource #C may be an affected time-frequency resource in the time-frequency resource #A.

In this embodiment of this application, "affected" may include one or more of the following meanings:
1. A signal-to-noise ratio of a signal (for example, an average signal-to-noise ratio of signals) carried on a time-frequency resource is less than or equal to a preset signal-to-noise ratio threshold, that is, transmission of data on the time-frequency resource is subject to relatively large interference. Consequently, it is unfavorable for decoding of the data on the time-frequency resource, or a probability of successfully decoding the data on the time-frequency resource is relatively low. As an example rather than a limitation, the signal-to-noise ratio threshold may be, for example, -3 dB or -6 dB, and the signal-to-noise ratio threshold may be specified by a communications system or communication; or the signal-to-noise ratio threshold may be determined by the network device and then sent to the terminal device by using, for example, higher layer signaling.
2. A transmit power of a signal carried on a time-frequency resource satisfies a preset condition. For example, the transmit power of the signal carried on the time-frequency resource is greater than a specified power threshold #A, or the transmit power of the signal carried on the time-frequency resource is less than a specified power threshold #B. As an example rather than a limitation, the power threshold #A may be, for example, 6 dB, and the power threshold #A may be specified by a communications system or communication; or the power threshold #A may be determined by the network device and then sent to the terminal device by using, for example, higher layer signaling. The power threshold #B may be, for example, 3 dB, and the power threshold #B may be specified by the communications system or communication; or the power threshold #A may be determined by the network device and then sent to the terminal device by using, for example, higher layer signaling.
3. A time-frequency resource does not carry allocated data.
4. A time-frequency resource carries other data in addition to allocated data.

In addition, in this embodiment of this application, the network device may determine the time-frequency resource #C from the time-frequency resource #A, and send indication information of the time-frequency resource #C (an example of fifth indication information) to the terminal device #A.

Alternatively, in this embodiment of this application, the terminal device #A or another terminal device communicating with the terminal device #A may determine the time-frequency resource #C from the time-frequency resource #A, and send indication information of the time-frequency resource #C (an example of sixth indication information) to the network device.

Therefore, a device for sending the data #B (for example, one party of the network device, the terminal device #A, or the another terminal device communicating with the terminal device #A) may obtain information about the time-frequency resource #C, for example, a location of the time-frequency resource #C in the time-frequency resource #A.

The sending device determines the data #B based on the time-frequency resource #C.

For example, the sending device may store a signal corresponding to the time-frequency resource #C (that is, an example of a first signal, for example, a signal mapped to the time-frequency resource #C and determined based on the control information #A, where the signal is marked as a signal #C in the following for ease of understanding and description); restore (for example, demodulate) the signal #C based on the control information #B (for example, after the control information #B is sent or received), to obtain data #X; and use some or all of the data #X as the data #B.

In this embodiment of this application, the sending device further buffers the bit #1, and stores a mapping relationship between the bit #1 and the time-frequency resource #A, for example, a mapping relationship between a bit in the bit #1 and a resource unit in the time-frequency resource #A. Therefore, the sending device determines a bit (marked as a bit #3 in the following for ease of understanding and differentiation) corresponding to the time-frequency resource #C (for example, each resource unit included in the time-frequency resource #C) based on the control information #B (for example, after the control information #B is sent or received), the mapping relationship, and the location of the time-frequency resource #C in the time-frequency resource #A, for example, a location, in the time-frequency resource #A, of each resource unit included in the time-frequency resource #C; and use some or all of data in the determined bit as the data #B.

For still another example, in this embodiment of this application, the control information #B may further include information used to indicate a size (for example, a quantity of included bits) of the data #B, so that the sending device or the receiving device can determine the data #B from the data #X or the bit #3 based on the size of the data #B. In this way, an actual size of the data #B is less than or equal to a size indicated by the control information #B.

For yet another example, in this embodiment of this application, the control information #B may be further used to indicate a location of the data #B in the bit #1, for example, a start location (a redundancy version number), so that the sending device or the receiving device can determine the data #B based on the redundancy version and a size of the time-frequency resource #B (a size occupied by the data #B on a time-frequency resource).

The following describes an example of the indication information (for example, the fifth indication information or the sixth indication information) used to indicate the time-frequency resource #C.

For example, if a downlink resource and downlink transmission are affected, and the indication information (that is, an example of fifth information or sixth information, which is marked as an indicator in the following for ease of understanding and description) of the time-frequency resource #C is sent by the network device to the terminal device, the terminal device may detect downlink control information for scheduling supplementary transmission (for example, the control information #B, and specifically, the information #B in the control information #B), and then read the indicator to obtain a location of a corresponding affected resource; or may read the indicator, and then detect downlink control information for scheduling supplementary transmission (for example, the control information #B, and specifically, the information #B in the control information #B).

Because both the downlink control information and the indicator are physical control channels, the terminal device may miss detection of the downlink control information for scheduling supplementary transmission or the indicator.

If downlink transmission of the terminal device is affected, and the terminal device misses detection of the downlink control information for scheduling supplementary transmission or the indicator that comes from the network device, the terminal device may introduce a signal unrelated to the terminal device into a decoding process, resulting in a failure of decoding. Because the terminal device does not know existence of the signal unrelated to the terminal device, subsequent retransmission and decoding may also be affected.

In view of this, in an implementation method of this application, the network device may determine, by using the following methods, whether the terminal device misses detection of the indicator.

Method 1: Different ACK/NACK feedback resources are used. To be specific, a time-frequency resource included in physical downlink control information that schedules original transmission (for example, the transmission is scheduled by using the control information #A) is different from a time-frequency resource included in physical downlink control information that schedules supplementary transmission (for example, the control information #B), where the time-frequency resource is used for ACK/NACK feedback corresponding to supplementary transmission of a downlink data signal. In this case, the network device determines, based on that the terminal device feeds back ACKs/NACKs on different time-frequency resources, whether the terminal device correctly receives scheduling of supplementary transmission. Different time-frequency resources are corresponding to different HARQ messages.

Method 2: DAIs are used. To be specific, a location of a DAI included in physical downlink control information that schedules original transmission is different from a location of a DAI included in physical downlink control information that schedules supplementary transmission, where the DAI is used for ACK/NACK feedback. In other words, in a same HARQ feedback message, a location of an A/N bit corresponding to original transmission in the HARQ feedback message is different from a location of an A/N bit corresponding to supplementary transmission in the HARQ feedback message. The network device determines, based on that the terminal device feeds back ACKs/NACKs in different locations in the HARQ feedback message, whether the terminal device correctly receives scheduling of supplementary transmission. That the A/N bits are in a same HARQ message means that joint coding and modulation is to be performed, and the A/N bits are sent by using a same time-frequency resource.

In addition, in an implementation method of this application, when the network device determines that the terminal device misses detection of the indicator, the network device may instruct, by using the following method, the terminal device to discard received data corresponding to affected transmission.

Method 3: Dedicated indication information (for example, indication information #S) is used. To be specific, in subsequent scheduling of retransmission, the network device uses the dedicated indication information in physical downlink control information to inform the terminal device that previous transmission or specific transmission of a same part of original data (for example, the TB#A) in a same HARQ process includes an affected resource.

The terminal is affected in this transmission, and the terminal device has not found that this transmission is affected. The indication information #S is used to instruct the terminal device to discard, in subsequent combination and decoding, a received signal corresponding to the affected transmission, to avoid introducing the signal unrelated to the terminal device into decoding.

The terminal is not affected in this transmission, but the terminal device considers, through indicator detection performed before, that this transmission is affected. In this case, the indication information #S is used to instruct the terminal device to use a signal in this transmission for normal combination and decoding.

More specifically, the indication information #S may include N bits, where N is related to a maximum quantity of retransmission times. In another example, the indication information #S includes only one bit, and whether last transmission is affected is indicated through bit inversion (that is, conversion between a bit 0 and a bit 1).

The foregoing three methods may be used jointly. For example, the network device schedules different time-frequency resources or different locations in a same HARQ message (that is, the method 1 and the method 2) for the terminal device, to determine whether the terminal device incorrectly receives/reads the indicator or the physical downlink control information that schedules supplementary transmission, or whether the terminal device incorrectly receives/reads the indicator and the physical downlink control information that schedules supplementary transmission. In this case, the network device may use a dedicated field or another field in DCI for scheduling retransmission subsequently, to inform the terminal device that a resource used for specific transmission is affected. In other words, the method 3 is used to alleviate impact of incorrect receiving or reading of the indicator and/or the physical downlink control information on downlink signal receiving of the terminal device.

If a downlink resource and downlink transmission are affected, and the indicator is sent by the network device to the terminal device or is detected by the network device (in this case, there is no indicator, and the network device directly schedules supplementary transmission and indicates an affected time-frequency resource in scheduling of supplementary transmission), the network device schedules the terminal device to perform supplementary transmission of an uplink signal, but does not receive the supplementarily transmitted uplink signal. The network device may determine that the terminal device has not correctly received or read the indicator sent by the network device to the terminal device or the physical downlink control information that schedules uplink supplementary transmission. The network device may schedule supplementary transmission again or directly schedules retransmission, and does not use, in subsequent combination and decoding, an uplink signal corresponding to an affected resource.

If an uplink resource and uplink transmission are affected, and the indicator is sent by the terminal device to the network device, the network device does not schedule the terminal device to perform supplementary transmission of a corresponding uplink signal, and the terminal device may send physical uplink control information to the network device, to inform the network device of specific uplink transmission that uses an affected uplink resource.

The indicator may be physical layer control information. A sending location or a possible sending location range of the indicator may be predefined, or semi-statically configured or indicated by using RRC signaling. The indicator may be exclusively used by a user, or shared by users in a group/users in a cell. The indicator may be sent only when a time-frequency resource used for transmission between the network device and the terminal device is affected, to indicate that the time-frequency resource is affected (and indicate a location of the affected time-frequency resource), or may be continually sent and may be used to indicate whether a time-frequency resource on which the indicator takes effect is affected or whether an affected time-frequency resource (and a location of the affected time-frequency resource) is included.

The indicator is used to indicate a third time-frequency resource. A specific indication method may be using a bitmap. To be specific, after time-frequency resources within an effective range (indication range) of the indicator are divided in advance and numbered, each time-frequency resource obtained through division is corresponding to one bit, the indicator includes a bitmap, and each bit in the bitmap is corresponding to one time-frequency resource obtained through division. Further, the indicator may be used to indicate affected resource-related information of the receiving device (for example, the terminal device or the network device). The indicator may be used to indicate a signal that is corresponding to the affected resource and that is not sent according to original scheduling (and whether a rate matching method or a puncture method is used to adapt the affected resource for the sent signal), or indicate that a transmit power of a signal sent according to original scheduling changes. The indicator may be further used to indicate whether the receiving device is to decode the signal received this time, and/or whether supplementary transmission is subsequently scheduled. When the sending location of the indicator is variable, the indicator may include indication information used to indicate a location of a resource on which the indicator takes effect, that is, a location of a resource indicated by the indicator. For example, the indication information may include a time domain offset between the indicator and the indicated resource.

Moreover, when there is no indicator, the network device and the terminal device may determine a location and a size of the third time-frequency resource by using a blind detection method. For example, the third time-frequency resource is used by the communications system through multiplexing. To be specific, a signal in addition to an original scheduled signal is sent by superposing the signal to the original scheduled signal. Different modulation schemes are used for the original signal and the new superposed signal, or another technical solution is provided for the communications system, so that the receiving device can detect the location and the size of the third time-frequency resource through blind detection, and further implement this application.

The control information sending method and the control information receiving method in the embodiments of this application may be performed in the following cases. Specifically, the control information #B (that is, an example of the second control information) in this embodiment of this application may be sent and received in the following cases; or the indicator (that is, an example of the fifth indication information or the sixth indication information) in this embodiment of this application may be sent and received in the following cases; or the second data in this embodiment of this application may be sent and received in the following cases.

### Case 1-1

The network device sends, to the terminal device, an indicator indicating a downlink transmission-related status, to inform the terminal device that reliability of a signal carried on the time-frequency resource #C indicated by the indicator is lower than that of a signal carried on a resource, other than the time-frequency resource #C, in the time-frequency resource #A. For example, the time-frequency resource #C does not carry allocated data, or the network device determines that the time-frequency resource #C is interfered with more seriously than any other resource in the time-frequency resource #A, or the time-frequency resource #C carries other data in addition to allocated data.

The network device sends, to the terminal device, the control information #B instructing the terminal device to receive the data #B, to improve reliability of receiving the TB#A that is corresponding to the data #A and the data #B.

### Case 1-2

The terminal device sends, to the network device, an indicator indicating a downlink transmission-related status, to inform the network device that in signals received by the terminal device on the time-frequency resource #A, reliability of a signal carried on the time-frequency resource #C is lower than that of a signal carried on a resource, other than the time-frequency resource #C, in the time-frequency resource #A. For example, the terminal device determines, during demodulation and decoding of a downlink signal, that reliability of the signal carried on the time-frequency resource #C is relatively low.

The network device sends, to the terminal device, the control information #B instructing the terminal device to receive the data #B, to improve reliability of receiving the TB#A that is corresponding to the data #A and the data #B.

### Case 1-3

The network device sends, to the terminal device, an indicator indicating an uplink transmission-related status, to inform the terminal device that reliability of a signal carried on the time-frequency resource #C indicated by the indicator is lower than that of a signal carried on a resource, other than the time-frequency resource #C, in the time-frequency resource #A. For example, the time-frequency resource #C is reallocated for other uplink transmission, or the terminal device determines, during demodulation and decoding of a downlink signal, that reliability of the signal carried on the time-frequency resource #C is relatively low.

The network device sends, to the terminal device, the control information #B instructing the terminal device to send the data #B, to improve reliability of receiving the TB#A that is corresponding to the data #A and the data #B.

### Case 1-4

The terminal device sends, to the network device, an indicator indicating an uplink transmission-related status, to inform the network device that reliability of a signal carried on the time-frequency resource #C is lower than that of a signal carried on a resource, other than the time-frequency resource #C, in the time-frequency resource #A. For example, the terminal device sends, on the time-frequency resource #C, data that is not allocated to the time-frequency resource #C for carrying, or the terminal device sends no data on the time-frequency resource #C.

The network device sends, to the terminal device, the control information #B instructing the terminal device to send the data #B, to improve reliability of receiving the TB#A that is corresponding to the data #A and the data #B.

The indicator is carried on a physical control channel.

### Case 1-5

The network device sends, to the terminal device, the control information #B instructing the terminal device to send or receive the data #B, to improve reliability of receiving the TB#A that is corresponding to the data #A and the data #B. For example, after the network device schedules downlink transmission on the first time-frequency resource and before the network device receives corresponding feedback information, the network device determines, based on a channel measurement signal fed back by the terminal device, that reliability of last scheduling is poor; and sends the control information #B instructing the terminal device to receive the data #B, to improve reliability of receiving the TB#A.

The control information sending method and the control information receiving method in the embodiments of this application may be performed in the following cases. Specifically, how the terminal device determines whether the control information #Y is corresponding to the control information #Z is described, for ease of understanding of the second indication information.

Case 2-1: The terminal device determines that there is previously transmitted control information (for example, the control information #Y) corresponding to the control information #Z.

After completing data receiving or data sending (an HARQ process #Y) scheduled by the control information #Y, the terminal device receives the indicator sent by the network device or sends the indicator to the network device, indicating that a signal corresponding to the control information #Y is affected. The terminal device waits for the network device to schedule supplementary transmission; after receiving the control information #Z in a predefined location, determines that the control information #Z is corresponding to the control information #Y; and reads information #Z (an example of the second indication information) included in the control information #Z, to determine scheduling performed by the network device for supplementary transmission.

Case 2-2: The terminal device receives the information #B included in the control information #B, to indicate the supplementary transmission data #B. The terminal device searches backward for last control information #A in a same process based on an HARQ process of the supplementary transmission data #B, and conforms that the control information #A is corresponding to the control information #B.

Case 2-3: The terminal device receives the information #B included in the control information #B, to indicate the supplementary transmission data #B. The terminal device searches backward for (detects) the indicator; and after reading the indicator, determines that the control information #A used to schedule transmission on the resource indicated by the indicator is corresponding to the control information #B.

According to the control information sending method and the control information receiving method in the embodiments of this application, if data transmission scheduled by the control information #A and the control information #B is downlink transmission, the feedback information is generated by the terminal device and is used to inform the network device whether a decoding result for corresponding downlink transmission is correct. For example, the feedback information is HARQ feedback information (ACK/NACK). If data transmission scheduled by the control information #A and the control information #B is uplink transmission, the feedback information is generated by the network device and is used to inform the network device whether a decoding result for corresponding uplink transmission is correct. For example, the feedback information is HARQ feedback information. The feedback information indicated by the network device to the terminal device may alternatively be implicit. For example, fifth control information sent by the network device to the terminal device is used to instruct the terminal device to send new uplink data, and an HARQ process of the new uplink data is the same as that of the data #A and the data #B. The terminal device determines, based on the fifth control information, that transmission of the TB#A is completed, that is, the TB#A is correctly decoded, or the TB#A is discarded when a quantity of TB#A transmission times exceeds a maximum quantity of retransmission times.

According to the control information sending method and the control information receiving method in the embodiments of this application, the determining the data #B based on the time-frequency resource #C (the time-frequency resource #C may be the affected time-frequency resource in the time-frequency resource #A) further includes: using a CB or a CB group corresponding to the time-frequency resource #C as candidate transmission content of the data #B. The content of the data #B is read from content corresponding to the CB or the CB group in a soft buffer, and a location from which the transmission content starts to be read (a location from which the data #B starts to be read from the CB or the CB group in the soft buffer) is indicated by the control information #B. For example, the control information #B indicates a redundancy version number of the CB or the CB group. A transmission size of the data #B is indicated by the control information #B, or a transmission size of the data #B is determined by the size of the time-frequency resource #B, where the time-frequency resource #B is indicated by the control information #B. A sequence number of the CB or the CB group is determined by the sending device or the receiving device based on the time-frequency resource #C, or is indicated by the control information #B. The CB or the CB group corresponding to the time-frequency resource #C may be a corresponding CB or a CB group of the data carried on the time-frequency resource #C when the control information #A schedules transmission on the time-frequency resource #A, or may be a CB or a CB group of data that plans to be sent (when the control information #A schedules transmission on the time-frequency resource #A) because the time-frequency resource #C is affected and that is not actually sent on the time-frequency resource #A. There may be more than one CB or CB group corresponding to the time-frequency resource #C.

According to the control information sending method in this embodiment of this application, the network device sends, to the terminal device, the first control information for transmission of the first data and the second control information for the second data. The first data includes all or some of bits obtained by encoding the first information block, and the second data includes all or some of bits obtained by encoding the first information block. In addition, the second indication information included in the second control information is used to indicate that the feedback information for the first information block is determined based on the result of combining and decoding the first data and the second data. In this way, of the network device and the terminal device, the device for receiving the first data and the second data can determine the feedback information for the first information block based on the second indication information and the result of combining and decoding the first data and the second data. This can increase a success rate of decoding the first information block, reduce a retransmission probability, and reduce a data transmission latency.

FIG. 6 is a schematic block diagram of a control information sending apparatus 300 according to an embodiment of this application. The control information sending apparatus 300 may be corresponding to (for example, may be configured for or may be) the network device described in the method 200, and modules or units in the control information sending apparatus 300 are configured to perform actions or processing processes performed by the network device in the method 200. Herein, to avoid repetition, details are omitted.

In this embodiment of this application, the apparatus 300 may include a processor and a transceiver, where the processor is communicatively connected to the transceiver. Optionally, the device further includes a memory, where the memory is communicatively connected to the processor. Optionally, the processor, the memory, and the transceiver may be communicatively connected. The memory may be configured to store an instruction, and the processor is configured to execute the instruction stored in the memory, to control the transceiver to send information or a signal.

A sending unit and a receiving unit in the apparatus 300 shown in FIG. 6 may be corresponding to the transceiver.

FIG. 7 is a schematic block diagram of a control information receiving apparatus 400 according to an embodiment of this application. The control information receiving apparatus 400 may be corresponding to (for example, may be configured for or may be) the terminal device (for example, the terminal device #A) described in the method 200, and modules or units in the control information receiving apparatus 400 are configured to perform actions or processing processes performed by the terminal device (for example, the terminal device #A) in the method 200. Herein, to avoid repetition, details are omitted.

In this embodiment of this application, the apparatus 400 may include a processor and a transceiver, where the processor is communicatively connected to the transceiver. Optionally, the device further includes a memory, where the memory is communicatively connected to the processor. Optionally, the processor, the memory, and the transceiver may be communicatively connected. The memory may be configured to store an instruction, and the processor is configured to execute the instruction stored in the memory, to control the transceiver to send information or a signal.

A sending unit and a receiving unit in the apparatus 400 shown in FIG. 7 may be corresponding to the transceiver.

It should be noted that the foregoing method embodiments may be applied to a processor or may be implemented by a processor. The processor may be an integrated circuit chip and has a signal processing capability. In an implementation process, steps in the foregoing method embodiments can be implemented by using a hardware integrated logic circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and the logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. As an example rather than a limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM). It should be noted that the memory in the systems and methods described in this specification includes but is not limited to these and any other proper type of memory.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of the embodiments of this application.

It may be clearly understood by a person skilled in the art that, for convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings, direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected depending on an actual requirement to achieve the objectives of the solutions of the embodiments.

In addition, functional units in the embodiments of this application may be integrated into one processing unit, or each of the units may exist alone physically, or at least two units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A control information sending method, wherein the method comprises:
sending (S210), by a network device (102, 300), first control information to a terminal device (116, 122, 400), wherein the first control information comprises first indication information and information about a first time-frequency resource, the first time-frequency resource carries at least first data, the first data comprises at least one first bit obtained by encoding a first information block, and the first indication information is used to indicate initial transmission or retransmission of the first information block; and
sending (S230), by the network device (102, 300), second control information to the terminal device (116, 122, 400), wherein the second control information comprises second indication information and information about a second time-frequency resource, the second time-frequency resource carries at least second data, the second data comprises at least one second bit obtained by encoding the first information block, and the second indication information is used to indicate that feedback information for the first information block is determined based on a result of combining and decoding the first data and the second data;
**characterized in that**
the second data is determined based on a third time-frequency resource, and the third time-frequency resource is a part of the first time-frequency resource, wherein the third time-frequency resource is a resource that reduces a probability that the terminal device (116, 122, 400) successfully decodes data carried on the third time-frequency resource;
the at least one first bit obtained by encoding the first information block is stored in at least one buffer, and
the second data is obtained from the at least one buffer based on a location of the third time-frequency resource in the first time-frequency resource and a mode of mapping, onto the first time-frequency resource, the at least one first bit obtained by encoding the first information block; and
the method further comprises sending, by the network device (102, 300), fifth indication information to the terminal device (116, 122, 400), wherein the fifth indication information is used to indicate the third time-frequency resource.

2. A control information receiving method, wherein the method comprises:
receiving, by a terminal device (116, 122, 400), first control information sent by a network device (102, 300), wherein the first control information comprises first indication information and information about a first time-frequency resource, the first time-frequency resource carries at least first data, the first data comprises at least one first bit obtained by encoding a first information block, and the first indication information is used to indicate initial transmission or retransmission of the first information block; and
receiving, by the terminal device (116, 122, 400), second control information sent by the network device (102, 300), wherein the second control information comprises second indication information and information about a second time-frequency resource, the second time-frequency resource carries at least second data, the second data comprises at least one second bit obtained by encoding the first information block, and the second indication information is used to indicate that feedback information for the first information block is determined based on a result of combining and decoding the first data and the second data;
**characterized in that**
the second data is determined based on a third time-frequency resource, and the third time-frequency resource is a part of the first time-frequency resource, wherein the third time-frequency resource is a resource that reduces a probability that the terminal device (116, 122, 400) successfully decodes data carried on the third time-frequency resource;
the at least one first bit obtained by encoding the first information block is stored in at least one buffer, and the second data is obtained from the at least one buffer based on a location of the third time-frequency resource in the first time-frequency resource and a mode of mapping, onto the first time-frequency resource, the at least one first bit obtained by encoding the first information block; and
the method further comprises receiving, by the terminal device (116, 122, 400), fifth indication information sent by the network device (102, 300), wherein the fifth indication information is used to indicate the third time-frequency resource.

3. A control information sending apparatus (300), wherein the apparatus (300) comprises: a sending unit, configured to send first control information to a terminal device (116, 122, 400), wherein the first control information comprises first indication information and information about a first time-frequency resource, the first time-frequency resource carries at least first data, the first data comprises at least one first bit obtained by encoding a first information block, and the first indication information is used to indicate initial transmission or retransmission of the first information block; and
the sending unit is further configured to send second control information to the terminal device (116, 122, 400), wherein the second control information comprises second indication information and information about a second time-frequency resource, the second time-frequency resource carries at least second data, the second data comprises at least one second bit obtained by encoding the first information block, and the second indication information is used to indicate that feedback information for the first information block is determined based on a result of combining and decoding the first data and the second data;
**characterized in that**
the second data is determined based on a third time-frequency resource, and the third time-frequency resource is a part of the first time-frequency resource, wherein the third time-frequency resource is a resource that reduces a probability that the terminal device (116, 122, 400) successfully decodes data carried on the third time-frequency resource;
the at least one first bit obtained by encoding the first information block is stored in at least one buffer, and
the second data is obtained from the at least one buffer based on a location of the third time-frequency resource in the first time-frequency resource and a mode of mapping, onto the first time-frequency resource, the at least one first bit obtained by encoding the first information block; and
the sending unit is further configured to send fifth indication information to the terminal device (116, 122, 400), wherein the fifth indication information is used to indicate the third time-frequency resource.

4. A control information receiving apparatus (400), wherein the apparatus (400) comprises: a receiving unit, configured to receive first control information sent by a network device (102, 300), wherein the first control information comprises first indication information and information about a first time-frequency resource, the first time-frequency resource carries at least first data, the first data comprises at least one first bit obtained by encoding a first information block, and the first indication information is used to indicate initial transmission or retransmission of the first information block; and
the receiving unit is further configured to receive second control information sent by the network device (102, 300), wherein the second control information comprises second indication information and information about a second time-frequency resource, the second time-frequency resource carries at least second data, the second data comprises at least one second bit obtained by encoding the first information block, and the second indication information is used to indicate that feedback information for the first information block is determined based on a result of combining and decoding the first data and the second data;
**characterized in that**
the second data is determined based on a third time-frequency resource, and the third time-frequency resource is a part of the first time-frequency resource, wherein the third time-frequency resource is a resource that reduces a probability that the control information receiving apparatus (400) successfully decodes data carried on the third time-frequency resource;
the at least one first bit obtained by encoding the first information block is stored in at least one buffer, and
the second data is obtained from the at least one buffer based on a location of the third time-frequency resource in the first time-frequency resource and a mode of mapping, onto the first time-frequency resource, the at least one first bit obtained by encoding the first information block; and
the receiving unit is further configured to receive fifth indication information sent by the network device (102, 300), wherein the fifth indication information is used to indicate the third time-frequency resource.

5. The method according to claim 1 or 2, wherein the second indication information comprises at least two bits, the second indication information is further used to indicate whether the second time-frequency resource carries third data, the third data comprises at least one bit obtained by encoding a second information block, and the second information block is the same as or different from the first information block; or
the second indication information comprises at least one bit, the second control information further comprises third indication information, the third indication information is used to indicate whether the second time-frequency resource carries third data, the third data comprises at least one bit obtained by encoding a second information block, and the second information block is the same as or different from the first information block.

6. The method according to claim 5, wherein the third indication information is information indicating a hybrid automatic repeat request HARQ process; and
the second time-frequency resource is used to carry only the second data, the HARQ process indicated by the third indication information is an HARQ process corresponding to the second data, and the HARQ process indicated by the third indication information is the same as an HARQ process corresponding to the first data; or
the second time-frequency resource is used to carry the second data and the third data, the HARQ process indicated by the third indication information is an HARQ process corresponding to the third data, the HARQ process indicated by the third indication information is different from an HARQ process corresponding to the first data, and an HARQ process corresponding to the second data is the same as the HARQ process corresponding to the first data.

7. The method according to claim 5 or 6, wherein the second control information further comprises fourth indication information, and the fourth indication information is used to indicate a modulation and mapping mode; and
the second time-frequency resource is used to carry only the second data, and the modulation and mapping mode indicated by the fourth indication information is a modulation and mapping mode corresponding to the second data; or
the second time-frequency resource is used to carry the second data and the third data, the modulation and mapping mode indicated by the fourth indication information is a modulation and mapping mode corresponding to the third data, and a modulation and mapping mode corresponding to the second data is the same as the modulation and mapping mode corresponding to the third data.

8. The method according to any one of claims 1, 2 and 5 to 7, wherein among all control information comprising the first control information and the second control information, a function of at least one preset field comprised in any control information is the same as that of at least one preset field comprised in other control information; and
the first indication information is carried in a first preset field in the first control information, and the second indication information is carried in a first preset field in the second control information.

9. A communications apparatus, comprising: a processor, configured to execute a computer program stored in a memory, so that the communications apparatus performs the method according to any one of claims 1, 2 and 5 to 8.

10. A computer-readable storage medium, comprising a computer program, wherein when the computer program is executed on a computer, cause the computer to perform the method according to any one of claims 1, 2 and claims 5 to 8.

## Patentansprüche

1. Verfahren zum Senden von Steuerinformationen, wobei das Verfahren Folgendes umfasst:
Senden (S210), durch eine Netzwerkvorrichtung (102, 300), erster Steuerinformationen an eine Endgerätevorrichtung (116, 122, 400), wobei die ersten Steuerinformationen erste Anzeigeinformationen und Informationen über eine erste Zeit-Frequenz-Ressource umfassen, die erste Zeit-Frequenz-Ressource mindestens erste Daten enthält, die ersten Daten mindestens ein erstes Bit umfassen, das durch Kodieren eines ersten Informationsblocks erlangt wird, und die ersten Anzeigeinformationen dazu verwendet werden, eine Erstübertragung oder Neuübertragung des ersten Informationsblocks anzuzeigen; und
Senden (S230), durch die Netzwerkvorrichtung (102, 300), zweiter Steuerinformationen an die Endgerätevorrichtung (116, 122, 400), wobei die zweiten Steuerinformationen zweite Anzeigeinformationen und Informationen über eine zweite Zeit-Frequenz-Ressource umfassen, die zweite Zeit-Frequenz-Ressource mindestens zweite Daten enthält, die zweiten Daten mindestens ein zweites Bit umfassen, das durch Kodieren des ersten Informationsblocks erlangt wird, und die zweiten Anzeigeinformationen dazu verwendet werden, anzuzeigen, dass Rückmeldungsinformationen für den ersten Informationsblock basierend auf einem Ergebnis von Kombinieren und Dekodieren der ersten Daten und der zweiten Daten bestimmt werden;
**dadurch gekennzeichnet, dass**
die zweiten Daten basierend auf einer dritten Zeit-Frequenz-Ressource bestimmt werden und die dritte Zeit-Frequenz-Ressource ein Teil der ersten Zeit-Frequenz-Ressource ist, wobei die dritte Zeit-Frequenz-Ressource eine Ressource ist, die eine Wahrscheinlichkeit verringert, dass die Endgerätevorrichtung (116, 122, 400) die in der dritten Zeit-Frequenz-Ressource enthaltenen Daten erfolgreich dekodiert;
das mindestens eine erste Bit, das durch Kodieren des ersten Informationsblocks erlangt wird, in mindestens einem Puffer gespeichert wird und die zweiten Daten aus dem mindestens einen Puffer basierend auf einem Speicherort der dritten Zeit-Frequenz-Ressource in der ersten Zeit-Frequenz-Ressource und einem Modus zum Zuordnen, zu der ersten Zeit-Frequenz-Ressource, des mindestens einen ersten Bits, das durch Kodieren des ersten Informationsblocks erlangt wird, erlangt werden; und
das Verfahren ferner Senden, durch die Netzwerkvorrichtung (102, 300), fünfter Anzeigeinformationen an die Endgerätevorrichtung (116, 122, 400) umfasst, wobei die fünften Anzeigeinformationen dazu verwendet werden, die dritte Zeit-Frequenz-Ressource anzuzeigen.

2. Verfahren zum Empfangen von Steuerinformationen, wobei das Verfahren Folgendes umfasst:
Empfangen, durch eine Endgerätevorrichtung (116, 122, 400), erster Steuerinformationen, die von einer Netzwerkvorrichtung (102, 300) gesendet werden, wobei die ersten Steuerinformationen erste Anzeigeinformationen und Informationen über eine erste Zeit-Frequenz-Ressource umfassen, die erste Zeit-Frequenz-Ressource mindestens erste Daten enthält, die ersten Daten mindestens ein erstes Bit umfassen, das durch Kodieren eines ersten Informationsblocks erlangt wird, und die ersten Anzeigeinformationen dazu verwendet werden, eine Erstübertragung oder Neuübertragung des ersten Informationsblocks anzuzeigen; und
Empfangen, durch die Endgerätevorrichtung (116, 122, 400), zweiter Steuerinformationen, die von der Netzwerkvorrichtung (102, 300) gesendet werden, wobei die zweiten Steuerinformationen zweite Anzeigeinformationen und Informationen über eine zweite Zeit-Frequenz-Ressource umfassen, die zweite Zeit-Frequenz-Ressource mindestens zweite Daten enthält, die zweiten Daten mindestens ein zweites Bit umfassen, das durch Kodieren des ersten Informationsblocks erlangt wird, und die zweiten Anzeigeinformationen dazu verwendet werden, anzuzeigen, dass Rückmeldungsinformationen für den ersten Informationsblock basierend auf einem Ergebnis von Kombinieren und Dekodieren der ersten Daten und der zweiten Daten bestimmt werden;
**dadurch gekennzeichnet, dass**
die zweiten Daten basierend auf einer dritten Zeit-Frequenz-Ressource bestimmt werden und die dritte Zeit-Frequenz-Ressource ein Teil der ersten Zeit-Frequenz-Ressource ist, wobei die dritte Zeit-Frequenz-Ressource eine Ressource ist, die eine Wahrscheinlichkeit verringert, dass die Endgerätevorrichtung (116, 122, 400) die in der dritten Zeit-Frequenz-Ressource enthaltenen Daten erfolgreich dekodiert;
das mindestens eine erste Bit, das durch Kodieren des ersten Informationsblocks erlangt wird, in mindestens einem Puffer gespeichert wird und die zweiten Daten aus dem mindestens einen Puffer basierend auf einem Speicherort der dritten Zeit-Frequenz-Ressource in der ersten Zeit-Frequenz-Ressource und einem Modus zum Zuordnen, zu der ersten Zeit-Frequenz-Ressource, des mindestens einen ersten Bits, das durch Kodieren des ersten Informationsblocks erlangt wird, erlangt werden; und
das Verfahren ferner Empfangen, durch die Endgerätevorrichtung (116, 122, 400), fünfter Anzeigeinformationen, die von der Netzwerkvorrichtung (102, 300) gesendet werden, umfasst, wobei die fünften Anzeigeinformationen dazu verwendet werden, die dritte Zeit-Frequenz-Ressource anzuzeigen.

3. Gerät zum Senden von Steuerinformationen (300), wobei das Gerät (300) Folgendes umfasst: eine Sendeeinheit, die dazu konfiguriert ist, erste Steuerinformationen an eine Endgerätevorrichtung (116, 122, 400) zu senden, wobei die ersten Steuerinformationen erste Anzeigeinformationen und Informationen über eine erste Zeit-Frequenz-Ressource umfassen, die erste Zeit-Frequenz-Ressource mindestens erste Daten enthält, die ersten Daten mindestens ein erstes Bit umfassen, das durch Kodieren eines ersten Informationsblocks erlangt wird, und die ersten Anzeigeinformationen dazu verwendet werden, eine Erstübertragung oder Neuübertragung des ersten Informationsblocks anzuzeigen; und
die Sendeeinheit ferner dazu konfiguriert ist, zweite Steuerinformationen an die Endgerätevorrichtung (116, 122, 400) zu senden, wobei die zweiten Steuerinformationen zweite Anzeigeinformationen und Informationen über eine zweite Zeit-Frequenz-Ressource umfassen, die zweite Zeit-Frequenz-Ressource mindestens zweite Daten enthält, die zweiten Daten mindestens ein zweites Bit umfassen, das durch Kodieren des ersten Informationsblocks erlangt wird, und die zweiten Anzeigeinformationen dazu verwendet werden, anzuzeigen, dass Rückmeldungsinformationen für den ersten Informationsblock basierend auf einem Ergebnis von Kombinieren und Dekodieren der ersten Daten und der zweiten Daten bestimmt werden; **dadurch gekennzeichnet, dass**
die zweiten Daten basierend auf einer dritten Zeit-Frequenz-Ressource bestimmt werden und die dritte Zeit-Frequenz-Ressource ein Teil der ersten Zeit-Frequenz-Ressource ist, wobei die dritte Zeit-Frequenz-Ressource eine Ressource ist, die eine Wahrscheinlichkeit verringert, dass die Endgerätevorrichtung (116, 122, 400) die in der dritten Zeit-Frequenz-Ressource enthaltenen Daten erfolgreich dekodiert; das mindestens eine erste Bit, das durch Kodieren des ersten Informationsblocks erlangt wird, in mindestens einem Puffer gespeichert wird und die zweiten Daten aus dem mindestens einen Puffer basierend auf einem Speicherort der dritten Zeit-Frequenz-Ressource in der ersten Zeit-Frequenz-Ressource und einem Modus zum Zuordnen, zu der ersten Zeit-Frequenz-Ressource, des mindestens einen ersten Bits, das durch Kodieren des ersten Informationsblocks erlangt wird, erlangt werden; und
die Sendeeinheit ferner dazu konfiguriert ist, fünfte Anzeigeinformationen an die Endgerätevorrichtung (116, 122, 400) zu senden, wobei die fünften Anzeigeinformationen dazu verwendet werden, die dritte Zeit-Frequenz-Ressource anzuzeigen.

4. Gerät zum Empfangen von Steuerinformationen (400), wobei das Gerät (400) Folgendes umfasst: eine Empfangseinheit, die dazu konfiguriert ist, erste Steuerinformationen zu empfangen, die von einer Netzwerkvorrichtung (102, 300) gesendet werden, wobei die ersten Steuerinformationen erste Anzeigeinformationen und Informationen über eine erste Zeit-Frequenz-Ressource umfassen, die erste Zeit-Frequenz-Ressource mindestens erste Daten enthält, die ersten Daten mindestens ein erstes Bit umfassen, das durch Kodieren eines ersten Informationsblocks erlangt wird, und die ersten Anzeigeinformationen dazu verwendet werden, eine Erstübertragung oder Neuübertragung des ersten Informationsblocks anzuzeigen; und
die Empfangseinheit ferner dazu konfiguriert ist, zweite Steuerinformationen, die von der Netzwerkvorrichtung (102, 300) gesendet werden, zu empfangen, wobei die zweiten Steuerinformationen zweite Anzeigeinformationen und Informationen über eine zweite Zeit-Frequenz-Ressource umfassen, die zweite Zeit-Frequenz-Ressource mindestens zweite Daten enthält, die zweiten Daten mindestens ein zweites Bit umfassen, das durch Kodieren des ersten Informationsblocks erlangt wird, und die zweiten Anzeigeinformationen dazu verwendet werden, anzuzeigen, dass Rückmeldungsinformationen für den ersten Informationsblock basierend auf einem Ergebnis von Kombinieren und Dekodieren der ersten Daten und der zweiten Daten bestimmt werden;
**dadurch gekennzeichnet, dass**
die zweiten Daten basierend auf einer dritten Zeit-Frequenz-Ressource bestimmt werden und die dritte Zeit-Frequenz-Ressource ein Teil der ersten Zeit-Frequenz-Ressource ist, wobei die dritte Zeit-Frequenz-Ressource eine Ressource ist, die eine Wahrscheinlichkeit verringert, dass das Gerät zum Empfangen von Steuerinformationen (400) die in der dritten Zeit-Frequenz-Ressource enthaltenen Daten erfolgreich dekodiert;
das mindestens eine erste Bit, das durch Kodieren des ersten Informationsblocks erlangt wird, in mindestens einem Puffer gespeichert wird und die zweiten Daten aus dem mindestens einen Puffer basierend auf einem Speicherort der dritten Zeit-Frequenz-Ressource in der ersten Zeit-Frequenz-Ressource und einem Modus zum Zuordnen, zu der ersten Zeit-Frequenz-Ressource, des mindestens einen ersten Bits, das durch Kodieren des ersten Informationsblocks erlangt wird, erlangt werden; und
die Empfangseinheit ferner dazu konfiguriert ist, fünfte Anzeigeinformationen zu empfangen, die von der Netzwerkvorrichtung (102, 300) gesendet werden, wobei die fünften Anzeigeinformationen dazu verwendet werden, die dritte Zeit-Frequenz-Ressource anzuzeigen.

5. Verfahren nach Anspruch 1 oder 2, wobei die zweiten Anzeigeinformationen mindestens zwei Bits umfassen, die zweiten Anzeigeinformationen ferner dazu verwendet werden, anzuzeigen, ob die zweite Zeit-Frequenz-Ressource dritte Daten enthält, die dritten Daten mindestens ein Bit umfassen, das durch Kodieren eines zweiten Informationsblocks erlangt wird, und der zweite Informationsblock derselbe wie oder ein anderer als der erste Informationsblock ist; oder
die zweiten Anzeigeinformationen mindestens ein Bit umfassen, die zweiten Steuerinformationen ferner dritte Anzeigeinformationen umfassen, die dritten Anzeigeinformationen dazu verwendet werden, anzuzeigen, ob die zweite Zeit-Frequenz-Ressource dritte Daten enthält, die dritten Daten mindestens ein Bit umfassen, das durch Kodieren eines zweiten Informationsblocks erlangt wird, und der zweite Informationsblock derselbe wie oder ein anderer als der erste Informationsblock ist.

6. Verfahren nach Anspruch 5, wobei die dritten Anzeigeinformationen Informationen sind, die einen hybriden automatischen Wiederholungsanforderungsprozess, HARQ-Prozess, anzeigen; und
die zweite Zeit-Frequenz-Ressource dazu verwendet wird, nur die zweiten Daten zu enthalten, der durch die dritten Anzeigeinformationen angezeigte HARQ-Prozess ein HARQ-Prozess ist, der den zweiten Daten entspricht, und der durch die dritten Anzeigeinformationen angezeigte HARQ-Prozess derselbe ist wie ein HARQ-Prozess, der den ersten Daten entspricht; oder
die zweite Zeit-Frequenz-Ressource dazu verwendet wird, die zweiten Daten und die dritten Daten zu enthalten, der durch die dritten Anzeigeinformationen angezeigte HARQ-Prozess ein HARQ-Prozess ist, der den dritten Daten entspricht, der durch die dritten Anzeigeinformationen angezeigte HARQ-Prozess sich von einem HARQ-Prozess unterscheidet, der den ersten Daten entspricht, und ein HARQ-Prozess, der den zweiten Daten entspricht, der gleiche ist wie der HARQ-Prozess, der den ersten Daten entspricht.

7. Verfahren nach Anspruch 5 oder 6, wobei die zweiten Steuerinformationen ferner vierte Anzeigeinformationen umfassen und die vierten Anzeigeinformationen dazu verwendet werden, einen Modulations- und Zuordnungsmodus anzuzeigen; und die zweite Zeit-Frequenz-Ressource dazu verwendet wird, nur die zweiten Daten zu enthalten, und der durch die vierten Anzeigeinformationen angezeigte Modulations- und Zuordnungsmodus ein Modulations- und Zuordnungsmodus ist, der den zweiten Daten entspricht; oder
die zweite Zeit-Frequenz-Ressource dazu verwendet wird, die zweiten Daten und die dritten Daten zu enthalten, der durch die vierten Anzeigeinformationen angezeigte Modulations- und Zuordnungsmodus ein Modulations- und Zuordnungsmodus ist, der den dritten Daten entspricht, und ein Modulations- und Zuordnungsmodus, der den zweiten Daten entspricht, derselbe ist wie der Modulations- und Zuordnungsmodus, der den dritten Daten entspricht.

8. Verfahren nach einem der Ansprüche 1, 2 und 5 bis 7, wobei unter allen Steuerinformationen, welche die ersten Steuerinformationen und die zweiten Steuerinformationen umfassen, eine Funktion von mindestens einem voreingestellten Feld, das in einer beliebigen Steuerinformation umfasst ist, die gleiche ist wie die von mindestens einem voreingestellten Feld, das in anderen Steuerinformationen umfasst ist; und
die ersten Anzeigeinformationen in einem ersten voreingestellten Feld in den ersten Steuerinformationen enthalten sind und die zweiten Anzeigeinformationen in einem ersten voreingestellten Feld in den zweiten Steuerinformationen enthalten sind.

9. Kommunikationsgerät, umfassend: einen Prozessor, der dazu konfiguriert ist, ein in einem Speicher gespeichertes Computerprogramm auszuführen, so dass das Kommunikationsgerät das Verfahren nach einem der Ansprüche 1, 2 und 5 bis 8 durchführt.

10. Computerlesbares Speichermedium, umfassend ein Computerprogramm, wobei, wenn das Computerprogramm auf einem Computer ausgeführt wird, der Computer dazu veranlasst wird, das Verfahren nach einem der Ansprüche 1, 2 und 5 bis 8 durchzuführen.

## Revendications

1. Procédé d'envoi d'informations de commande, dans lequel le procédé comprend :
l'envoi (S210), par un dispositif de réseau (102, 300), de premières informations de commande à un dispositif terminal (116, 122, 400), dans lequel les premières informations de commande comprennent des premières informations d'indication et des informations concernant une première ressource temps-fréquence, la première ressource temps-fréquence transporte au moins des premières données, les premières données comprennent au moins un premier bit obtenu par codage d'un premier bloc d'informations, et les premières informations d'indication sont utilisées pour indiquer une transmission ou une retransmission initiale du premier bloc d'informations ; et
l'envoi (S230), par le dispositif de réseau (102, 300), de secondes informations de commande au dispositif terminal (116, 122, 400), dans lequel les secondes informations de commande comprennent des deuxièmes informations d'indication et des informations concernant une deuxième ressource temps-fréquence, la deuxième ressource temps-fréquence transporte au moins des deuxièmes données, les deuxièmes données comprennent au moins un second bit obtenu par codage du premier bloc d'informations, et les deuxièmes informations d'indication sont utilisées pour indiquer que des informations de rétroaction pour le premier bloc d'informations sont déterminées sur la base d'un résultat de la combinaison et du décodage des premières données et des deuxièmes données ;
**caractérisé en ce que**
les deuxièmes données sont déterminées sur la base d'une troisième ressource temps-fréquence, et la troisième ressource temps-fréquence fait partie de la première ressource temps-fréquence, dans lequel la troisième ressource temps-fréquence est une ressource qui réduit une probabilité que le dispositif terminal (116, 122, 400) décode avec succès des données transportées sur la troisième ressource temps-fréquence ;
l'au moins un premier bit obtenu par codage du premier bloc d'informations est stocké dans au moins un tampon, et les deuxièmes données sont obtenues à partir de l'au moins un tampon sur la base d'un emplacement de la troisième ressource temps-fréquence dans la première ressource temps-fréquence et d'un mode de mappage, sur la première ressource temps-fréquence, de l'au moins un premier bit obtenu par codage du premier bloc d'informations ; et
le procédé comprend également l'envoi, par le dispositif de réseau (102, 300), de cinquièmes informations d'indication au dispositif terminal (116, 122, 400), dans lequel les cinquièmes informations d'indication sont utilisées pour indiquer la troisième ressource temps-fréquence.

2. Procédé de réception d'informations de commande, dans lequel le procédé comprend :
la réception, par un dispositif terminal (116, 122, 400), de premières informations de commande envoyées par un dispositif de réseau (102, 300), dans lequel les premières informations de commande comprennent des premières informations d'indication et des informations concernant une première ressource temps-fréquence, la première ressource temps-fréquence transporte au moins des premières données, les premières données comprennent au moins un premier bit obtenu par codage d'un premier bloc d'informations, et les premières informations d'indication sont utilisées pour indiquer une transmission ou une retransmission initiale du premier bloc d'informations ; et
la réception, par le dispositif terminal (116, 122, 400), de secondes informations de commande envoyées par le dispositif de réseau (102, 300), dans lequel les secondes informations de commande comprennent des deuxièmes informations d'indication et des informations concernant une deuxième ressource temps-fréquence, la deuxième ressource temps-fréquence transporte au moins des deuxièmes données, les deuxièmes données comprennent au moins un second bit obtenu par codage du premier bloc d'informations, et les deuxièmes informations d'indication sont utilisées pour indiquer que des informations de rétroaction pour le premier bloc d'informations sont déterminées sur la base d'un résultat de la combinaison et du décodage des premières données et des deuxièmes données ;
**caractérisé en ce que**
les deuxièmes données sont déterminées sur la base d'une troisième ressource temps-fréquence, et la troisième ressource temps-fréquence fait partie de la première ressource temps-fréquence, dans lequel la troisième ressource temps-fréquence est une ressource qui réduit une probabilité que le dispositif terminal (116, 122, 400) décode avec succès des données transportées sur la troisième ressource temps-fréquence ;
l'au moins un premier bit obtenu par codage du premier bloc d'informations est stocké dans au moins un tampon, et les deuxièmes données sont obtenues à partir de l'au moins un tampon sur la base d'un emplacement de la troisième ressource temps-fréquence dans la première ressource temps-fréquence et d'un mode de mappage, sur la première ressource temps-fréquence, de l'au moins un premier bit obtenu par codage du premier bloc d'informations ; et
le procédé comprend également la réception, par le dispositif terminal (116, 122, 400), de cinquièmes informations d'indication envoyées par le dispositif de réseau (102, 300), dans lequel les cinquièmes informations d'indication sont utilisées pour indiquer la troisième ressource temps-fréquence.

3. Appareil d'envoi d'informations de commande (300), dans lequel l'appareil (300) comprend : une unité d'envoi, configurée pour envoyer des premières informations de commande à un dispositif terminal (116, 122, 400), dans lequel les premières informations de commande comprennent des premières informations d'indication et des informations concernant une première ressource temps-fréquence, la première ressource temps-fréquence transporte au moins des premières données, les premières données comprennent au moins un premier bit obtenu par codage d'un premier bloc d'informations, et les premières informations d'indication sont utilisées pour indiquer une transmission ou une retransmission initiale du premier bloc d'informations ; et
l'unité d'envoi est en outre configurée pour envoyer des secondes informations de commande au dispositif terminal (116, 122, 400), dans lequel les secondes informations de commande comprennent des deuxièmes informations d'indication et des informations concernant une deuxième ressource temps-fréquence, la deuxième ressource temps-fréquence transporte au moins des deuxièmes données, les deuxièmes données comprennent au moins un second bit obtenu par codage du premier bloc d'informations, et les deuxièmes informations d'indication sont utilisées pour indiquer que des informations de rétroaction pour le premier bloc d'informations sont déterminées sur la base d'un résultat de la combinaison et du décodage des premières données et des deuxièmes données ;
**caractérisé en ce que**
les deuxièmes données sont déterminées sur la base d'une troisième ressource temps-fréquence, et la troisième ressource temps-fréquence fait partie de la première ressource temps-fréquence, dans lequel la troisième ressource temps-fréquence est une ressource qui réduit une probabilité que le dispositif terminal (116, 122, 400) décode avec succès des données transportées sur la troisième ressource temps-fréquence ;
l'au moins un premier bit obtenu par codage du premier bloc d'informations est stocké dans au moins un tampon, et les deuxièmes données sont obtenues à partir de l'au moins un tampon sur la base d'un emplacement de la troisième ressource temps-fréquence dans la première ressource temps-fréquence et d'un mode de mappage, sur la première ressource temps-fréquence, de l'au moins un premier bit obtenu par codage du premier bloc d'informations ; et
l'unité d'envoi est en outre configurée pour envoyer des cinquièmes informations d'indication au dispositif terminal (116, 122, 400), dans lequel les cinquièmes informations d'indication sont utilisées pour indiquer la troisième ressource temps-fréquence.

4. Appareil de réception d'informations de commande (400), dans lequel l'appareil (400) comprend : une unité de réception, configurée pour recevoir des premières informations de commande envoyées par un dispositif de réseau (102, 300), dans lequel les premières informations de commande comprennent des premières informations d'indication et des informations concernant une première ressource temps-fréquence, la première ressource temps-fréquence transporte au moins des premières données, les premières données comprennent au moins un premier bit obtenu par codage d'un premier bloc d'informations, et les premières informations d'indication sont utilisées pour indiquer une transmission ou une retransmission initiale du premier bloc d'informations ; et
l'unité de réception est en outre configurée pour recevoir des secondes informations de commande envoyées par le dispositif de réseau (102, 300), dans lequel les secondes informations de commande comprennent des deuxièmes informations d'indication et des informations concernant une deuxième ressource temps-fréquence, la deuxième ressource temps-fréquence transporte au moins des deuxièmes données, les deuxièmes données comprennent au moins un second bit obtenu par codage du premier bloc d'informations, et les deuxièmes informations d'indication sont utilisées pour indiquer que des informations de rétroaction pour le premier bloc d'informations sont déterminées sur la base d'un résultat de la combinaison et du décodage des premières données et des deuxièmes données ;
**caractérisé en ce que**
les deuxièmes données sont déterminées sur la base d'une troisième ressource temps-fréquence, et la troisième ressource temps-fréquence fait partie de la première ressource temps-fréquence, dans lequel la troisième ressource temps-fréquence est une ressource qui réduit une probabilité que l'appareil de réception d'informations de commande (400) décode avec succès des données transportées sur la troisième ressource temps-fréquence ;
l'au moins un premier bit obtenu par codage du premier bloc d'informations est stocké dans au moins un tampon, et les deuxièmes données sont obtenues à partir de l'au moins un tampon sur la base d'un emplacement de la troisième ressource temps-fréquence dans la première ressource temps-fréquence et d'un mode de mappage, sur la première ressource temps-fréquence, de l'au moins un premier bit obtenu par codage du premier bloc d'informations ; et
l'unité de réception est en outre configurée pour recevoir des cinquièmes informations d'indication envoyées par le dispositif de réseau (102, 300), dans lequel les cinquièmes informations d'indication sont utilisées pour indiquer la troisième ressource temps-fréquence.

5. Procédé selon la revendication 1 ou 2, dans lequel les deuxièmes informations d'indication comprennent au moins deux bits, les deuxièmes informations d'indication sont en outre utilisées pour indiquer si la deuxième ressource temps-fréquence transporte des troisièmes données, les troisièmes données comprennent au moins un bit obtenu par codage d'un second bloc d'informations, et le second bloc d'informations est identique ou différent du premier bloc d'informations ; ou
les deuxièmes informations d'indication comprennent au moins un bit, les secondes informations de commande comprennent également des troisièmes informations d'indication, les troisièmes informations d'indication sont utilisées pour indiquer si la deuxième ressource temps-fréquence transporte des troisièmes données, les troisièmes données comprennent au moins un bit obtenu par codage d'un second bloc d'informations, et le second bloc d'informations est identique ou différent du premier bloc d'informations.

6. Procédé selon la revendication 5, dans lequel les troisièmes informations d'indication sont des informations indiquant un processus de demande de répétition automatique hybride, HARQ ; et
la deuxième ressource temps-fréquence est utilisée pour transporter uniquement les deuxièmes données, le processus HARQ indiqué par les troisièmes informations d'indication est un processus HARQ correspondant aux deuxièmes données, et le processus HARQ indiqué par les troisièmes informations d'indication est le même qu'un processus HARQ correspondant aux premières données ; ou
la deuxième ressource temps-fréquence est utilisée pour transporter les deuxièmes données et les troisièmes données, le processus HARQ indiqué par les troisièmes informations d'indication est un processus HARQ correspondant aux troisièmes données, le processus HARQ indiqué par les troisièmes informations d'indication est différent d'un processus HARQ correspondant aux premières données, et un processus HARQ correspondant aux deuxièmes données est le même que le processus HARQ correspondant aux premières données.

7. Procédé selon la revendication 5 ou 6, dans lequel les secondes informations de commande comprennent également des quatrièmes informations d'indication, et les quatrièmes informations d'indication sont utilisées pour indiquer un mode de modulation et de mappage ; et
la deuxième ressource temps-fréquence est utilisée pour transporter uniquement les deuxièmes données, et le mode de modulation et de mappage indiqué par les quatrièmes informations d'indication est un mode de modulation et de mappage correspondant aux deuxièmes données ; ou
la deuxième ressource temps-fréquence est utilisée pour transporter les deuxièmes données et les troisièmes données, le mode de modulation et de mappage indiqué par les quatrièmes informations d'indication est un mode de modulation et de mappage correspondant aux troisièmes données, et un mode de modulation et de mappage correspondant aux deuxièmes données est le même que le mode de modulation et de mappage correspondant aux troisièmes données.

8. Procédé selon l'une quelconque des revendications 1, 2 et 5 à 7, dans lequel parmi toutes les informations de commande comprenant les premières informations de commande et les secondes informations de commande, une fonction d'au moins un champ prédéfini compris dans toutes informations de commande est la même que celle d'au moins un champ prédéfini compris dans d'autres informations de commande ; et
les premières informations d'indication sont transportées dans un premier champ prédéfini dans les premières informations de commande, et les deuxièmes informations d'indication sont transportées dans un premier champ prédéfini dans les secondes informations de commande.

9. Appareil de communication, comprenant : un processeur, configuré pour exécuter un programme informatique stocké dans une mémoire, de sorte que l'appareil de communication réalise le procédé selon l'une quelconque des revendications 1, 2 et 5 à 8.

10. Support de stockage lisible par ordinateur, comprenant un programme informatique, dans lequel, lorsque le programme informatique est exécuté sur un ordinateur, amener l'ordinateur à réaliser le procédé selon l'une quelconque des revendications 1, 2 et des revendications 5 à 8.
